# NEUE EUROPÄISCHE PATENTSCHRIFT

(11) **EP 1 984 438 B2**
(45) Veröffentlichungstag und Bekanntmachung des Hinweises auf die Entscheidung über den Einspruch: **18.05.2016**
(45) Hinweis auf die Patenterteilung: 31.03.2010
(21) Anmeldenummer: 07704211.7
(22) Anmeldetag: 30.01.2007
(51) Int. Cl.: C08K 5/00, C08K 5/19, C08J 5/18, A47G 27/00, A43B 13/04, A43B 1/00

(54) **ANTISTATISCHES POLYURETHAN**
ANTISTATIC POLYURETHANE
POLYURETHANE ANTISTATIQUE

(30) Priorität: 07.02.2006 EP 06101354
(43) Veröffentlichungstag der Anmeldung: 29.10.2008
(73) Patentinhaber: BASF SE, 67056 Ludwigshafen am Rhein (DE)
(72) Erfinder: EGBERS, Gitta, 49080 Osnabrück (DE); ORTALDA, Marco, I-10137 Torino (IT); TEMPLIN, Markus, 49448 Lemförde (DE)
(74) Vertreter: BASF IP Association
(86) Internationale Anmeldenummer: PCT/EP2007/050857
(87) Internationale Veröffentlichungsnummer: WO 2007/090755

(56) Entgegenhaltungen:
- EP-A1- 0 224 979
- EP-A1- 1 134 268
- WO-A-01/49925
- WO-A-2004/005391
- AT-B- 328 749
- DE-A1- 2 436 644
- US-A- 4 460 644
- Produktbeschreibung zu Bis(hydrogenated tallow alkyl) dimethyl ammonium methylate sulfates
- CELLA J.A. ET AL: 'The Relation of Structure and Critical Concentration to the Bactericidal Activity of Quaternary Ammonium Salts' JOURNAL OF THE AMERICAN CHEMICAL SOCIETY Bd. 74, 20 April 1952, Seite 2061
- WELTON T.: 'Room-Temperature Ionic Liquids. Solvents for Synthesis and Catalysis' CHEMICAL REVIEWS Bd. 99, Nr. 8, 1999, Seiten 2071 - 2083
- WASSERSCHEID P. ET AL.: 'Ionische Flüssigkeiten - neue, "Lösungen" für die Übergangsmetallkatalyse' ANGEW. CHEM. Bd. 112, 2000, Seiten 3926 - 3945

## Beschreibung

Die Erfindung betrifft ein zelliges Polyurethan, welches eine ionische Flüssigkeit nach Anspruch 1 enthält. Weiter betrifft die Erfindung ein Verfahren zur Herstellung eines solchen Polyurethans nach Anspruch 14, Rollen, Bodenbeläge, Automobilinnenteile, Folien und antistatische Schuhsohlen, enthaltend ein erfindungsgemäßes Polyurethan und die Verwendung einer ionischen Flüssigkeit nach Anspruch 15 als antistatisches Additiv.

Weitere Ausführungsformen der vorliegenden Erfindung sind den Ansprüchen, der Beschreibung und den Beispielen zu entnehmen.

Statische Aufladungen können an elektrischen Nichtleitern oder durch solche isolierten Gegenständen oder Personen auftreten und sind häufig unerwünscht, schädlich und teilweise gefährlich. So kann es beispielsweise bei manchen medizinischen Anwendungen oder bei der Herstellung von elektronischen Bauteilen erforderlich sein, in staubreduzierter Atmosphäre zu arbeiten. Elektrostatische Aufladungen von Personen oder Gegenständen aber führt dazu, dass an diesen Personen oder Gegenständen vermehrt Staubpartikel anhaften, welche dann in diesen Fällen zu Komplikationen führen können. Weiter kann es im Rahmen von elektrostatischen Aufladungen zu schlagartigen Entladungen kommen, wodurch beispielsweise elektronische Bauteile beschädigt werden können. In explosionsgefährdenden Bereichen können elektrostatische Entladungen sogar Explosionen verursachen. Daher wird versucht, durch Erdung dieser Gegenstände oder Personen die Gefahr einer elektrostatischen Aufladung zu verringern.

In vielen Fällen handelt es sich bei den elektrischen Nichtleitern um Polymere. Da diese Polymere meist nicht durch leitende Materialien ersetzt werden können, wird versucht die Leitfähigkeit der Polymere durch die Zugabe von antistatischen Additiven zu erhöhen und so die betreffenden Gegenstände oder Materialien zu erden. Polymere, die antistatische Additive enthalten, werden im Folgenden als antistatische Polymere bezeichnet.

Solche antistatischen Polymere sind bekannt. Beispielsweise werden in DE 3531660 antistatische Polyurethanschuhsohlen beschrieben. Die antistatische Wirkung wird durch 0,01 bis 0.3 Gew.-% chemisch gebundene Sulfonat-Gruppen erreicht. Die erreichten Durchgangswiderstände betragen <10⁸ Ω/cm.

Weiter werden in EP 270 009 antistatische Polyurethanschuhsohlen beschrieben, wobei als antistatisches Additiv Natriumtriphenylborat enthalten ist.

Der Einsatz unterschiedlicher quarternärer Ammoniumsalze zur Erhöhung der Leitfähigkeit von Polymeren wird in EP 1134268 beschrieben. Es handelt sich dabei um Modifikationen handelsüblicher Antistatika wie Catafor F® oder Catafor PU® der Firma Rhodia. So werden Durchgangswiderstände von ca. 10⁷ Ω/cm erreicht. Die Beispiele aus EP 1134268 lassen eine deutliche Abhängigkeit des Durchgangswiderstandes von der Luftfeuchte erkennen.

DE 3528597 beschreibt den Einsatz von Rußen als Leitfähigkeitsverbesserer. Es werden Durchgangswiderstände von <10⁹ Ω/cm erreicht. Nachteilig ist hierbei die schwarze Färbung des Produktes und verringerte mechanische Eigenschaften bei Einsatz größerer Mengen.

Ein Nachteil des Stands der Technik ist der teilweise immer noch sehr hohe Durchgangswiderstand eines solchen Polymers von 10⁷ Ω/cm und mehr und die Abhängigkeit der Durchgangswiderstände von der Luftfeuchtigkeit. Dadurch kann es trotz leitfähiger Zusätze zu statischen Aufladungen kommen.

Ein weiterer Nachteil der im Stand der Technik vorgeschlagenen antistatischen Additive ist deren teilweise mangelhafte Dauerwirkung, wodurch sich in bestimmten Fällen bereits nach wenigen Tagen der Durchgangswiderstand der Polymere erhöht.

Schließlich führen hohe Zusätze von bekannten antistatischen Additiven zu einer Verschlechterung der Materialeigenschaften.

Aufgabe der Erfindung war es daher, antistatische, zellige Polyurethane zu liefern, die einen Durchgangswiderstand von kleiner 10⁷ Ω/cm aufweisen und die oben geschilderten Nachteile nicht aufweisen.

Diese Aufgabe wird gelöst durch zellige Polyurethane, die eine ionische Flüssigkeit nach Anspruch 1 enthalten.

Die ionischen Flüssigkeiten besitzen einen Schmelzpunkt von in einem Bereich von-50°C bis 150°C, mehr bevorzugt im Bereich von -20°C bis unter 100 °C und weiterhin mehr bevorzugt von -20 °C bis unter 80 °C. Besonders bevorzugt ist der Schmelzpunkt der ionischen Flüssigkeit unter 50 °C, insbesondere sind erfindungsgemäße ionische Flüssigkeiten bei Raumtemperatur flüssig. Bei Raumtemperatur flüssige Ionische Flüssigkeiten sind leicht verarbeitbar und haben eine ausgezeichnete antistatische Wirkung.

Die erfindungsgemäßen ionischen Flüssigkeiten enthalten als Kationen solche Kationen, die ausgewählt sind aus den Verbindungen der Formeln (IVe), (IVf), (IVg), IVg'), (IVh) und (IVv),

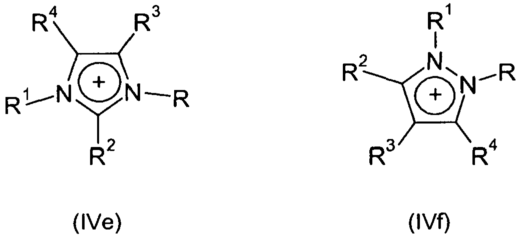

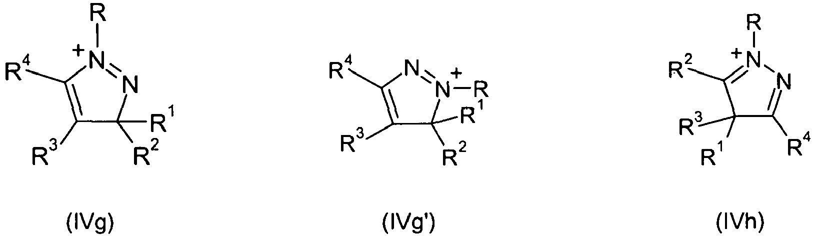

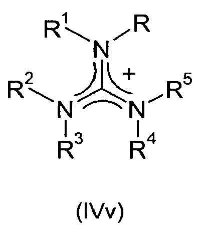

In den oben genannten Formeln (IVe), (IVf), (IVg), (IVg'), (IVh) und (IVv) stehen
- der Rest R für Wasserstoff, einen Kohlenstoff enthaltenden organischen, gesättigten oder ungesättigten, acyclischen oder cyclischen, aliphatischen, aromatischen oder
   araliphatischen, unsubstituierten oder durch 1 bis 5 Heteroatome oder funktionelle Gruppen unterbrochenen oder substituierten Rest mit 1 bis 20 Kohlenstoffatomen; und
- die Reste R¹ bis R⁵ unabhängig voneinander jeweils für Wasserstoff, eine Sulfo-Gruppe oder einen organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unter-brochenen oder substituierten Rest mit 1 bis 20 Kohlenstoffatomen, wobei die Reste R¹ bis R⁵, welche in den oben genannten Formeln (IV) an ein Kohlenstoffatom (und nicht an ein Heteroatom) gebunden sind, zusätzlich auch für Halogen oder eine funktionelle Gruppe stehen können; oder
zwei benachbarte Reste aus der Reihe R¹ bis R⁵ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen.

Als Heteroatome kommen bei der Definition der Reste R und R¹ bis R⁵ prinzipiell alle Heteroatome in Frage, welche in der Lage sind, formell eine -CH₂-, eine -CH=, eine -C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte Gruppen seien insbesondere -O-, -S-, -SO-, -SO₂-, -NR'-, -N=, -PR'-; -PR'₂ und -SiR'₂- genannt, wobei es sich bei den Resten R' um den verbleibenden Teil des Kohlenstoff enthaltenden Rests handelt. Die Reste R¹ bis R⁵ können dabei in den Fällen, in denen diese in den oben genannten Formeln (IV) an ein Kohlenstoffatom (und nicht an ein Heteroatom) gebunden sind, auch direkt über das Heteroatom gebunden sein.

Als funktionelle Gruppen kommen prinzipiell alle funktionellen Gruppen in Frage, welche an ein Kohlenstoffatom oder ein Heteroatom gebunden sein können. Als geeignete Beispiele seien -OH (Hydroxy), =O (insbesondere als Carbonylgruppe), -NH₂ (Amino), =NH (Imino), -COOH (Carboxy), -CONH₂ (Carboxamid), -SO₃H (Sulfo) und -CN (Cyano) genannt. Fuktionelle Gruppen und Heteroatome können auch direkt benachbart sein, so dass auch Kombinationen aus mehreren benachbarten Atomen, wie etwa -O-(Ether), -S- (Thioether), -COO- (Ester), -CONH- (sekundäres Amid) oder -CONR'- (tertiäres Amid), mit umfasst sind, beispielsweise Di-(C₁-C₄-Alkyl)-amino, C₁-C₄-Alkyloxycarbonyl oder C₁-C₄-Alkyloxy.

Als Halogene seien Fluor, Chlor, Brom und lod genannt.

### Bevorzugt steht der Rest R für

- unverzweigtes oder verzweigtes, unsubstituiertes oder ein bis mehrfach mit Hydroxy, Halogen, Phenyl, Cyano, C₁- bis C₆-Alkoxycarbonyl und/oder Sulfonsäure substituiertes C₁- bis C₁₈-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, 2-Hydroxyethyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure;
- einen Rest, der sich ableitet aus Glykolen, Butylenglykolen und deren Oligomere mit 1 bis 100 Einheiten und einem Wasserstoff oder einem C₁- bis C₈-Alkyl als Endgruppe, wie beispielsweise R^{A}O-(CHR^{B}-CH₂-O)ₙ-CHR^{B}-CH₂- oder R^{A-}O-(CH₂CH₂CH₂CH₂O)ₙ-CH₂CH₂CH₂CH₂O- mit R^{A} und R^{B} bevorzugt Wasserstoff, Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxa-undecyl, 3,6,9,12-Tetraoxatridecyl und 3,6,9,12-Tetraoxatetradecyl;
- Vinyl; und
- N,N-Di-C₁- bis C₆-alkyl-amino, wie beispielsweise N,N-Dimethylamino und N,N-Diethylamino.

Besonders bevorzugt steht der Rest R für unverzweigtes und unsubstituiertes C₁- bis C₁₈-Alkyl, wie beispielsweise Methyl, Ethyl, 1-Propyl, 1-Butyl, 1-Pentyl, 1-Hexyl, 1-Heptyl, 1-Octyl, 1-Decyl, 1-Dodecyl, 1-Tetradecyl, 1-Hexadecyl, 1-Octadecyl, insbesondere für Methyl, Ethyl, 1-Butyl und 1-Octyl sowie für CH₃O-(CH₂CH₂O)ₙ-CH₂CH₂-und CH₃CH₂O-(CH₂CH₂O)ₙ-CH₂CH₂- mit n gleich 0 bis 3.

### Bevorzugt stehen die Reste R¹ bis R⁹ unabhängig voneinander jeweils für

- Wasserstoff;
- Halogen;
- eine funktionelle Gruppe, insbesondere solcher, wie oben genannt;
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₁-C₁₈-Alkyl;
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₂-C₁₈-Alkenyl;
- gegebenenfalls durch funktionelle Gruppen, Aryl, Alkyl, Aryloxy, Alkyloxy, Halogen, Heteroatome und/oder Heterocyclen substituiertes C₆-C₁₂-Aryl;
- gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkyl;
- gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkenyl; oder
- einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus bedeuten; oder
zwei benachbarte Reste zusammen für
- einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.

Bei gegebenenfalls durch funktionelle Gruppen, Aryl, Alkyl, Aryloxy, Alkyloxy, Halogen, Heteroatome und/oder Heterocyclen substituiertem C₁- bis C₁₈-Alkyl handelt es sich bevorzugt um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-l-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, 2-Etylhexyl, 2,4,4-Trimethyl-pentyl, 1,1,3,3-Tetramethylbutyl, 1-Nonyl, 1-Decyl, 1-Undecyl, 1-Dodecyl, 1-Tridecyl, 1-Tetradecyl, 1-Pentadecyl, 1-Hexadecyl, 1-Heptadecyl, 1-Octadecyl, Cyclopentylmethyl, 2-Cyclopentylethyl, 3-Cyclopentylpropyl, Cyclohexylmethyl, 2-Cyclohexylethyl, 3-Cyclohexylpropyl, Benzyl (Phenylmethyl), Diphenylmethyl (Benzhydryl), Triphenylmethyl, 1-Phenylethyl, 2-Phenylethyl, 3-Phenylpropyl, α,α-Dimethylbenzyl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxy-carbonylethyl, 2-Butoxycarbonylpropyl, 1,2-Di-(methoxycarbonyl)-ethyl, Methoxy, Ethoxy, Formyl, 1,3-Dioxolan-2-yl, 1,3-Dioxan-2-yl, 2-Methyl-1,3-dioxolan-2-yl, 4-Methyl-1,3-dioxolan-2-yl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Amino-hexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-di-methylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Acetyl, CₙF_{2(n-a)+(1-b)}H_{2a+b} mit n gleich 1 bis 30, 0 ≤ a ≤ n und b = 0 oder 1 (beispielsweise CF₃, C₂F₅, CH₂CH₂-C₍ₙ₋₂₎F_{2(n-2)+1,} C₆F₁₃, C₈F₁₇, C₁₀F₂₁, C₁₂F₂₅), Chlormethyl, 2-Chlorethyl, Trichlormethyl, 1,1-Dimethyl-2-chlorethyl, Methoxymethyl, 2-Butoxyethyl, Diethoxymethyl, Diethoxyethyl, 2-Isopropoxyethyl, 2-Butoxypropyl, 2-Octyloxyethyl, 2-Methoxyisopropyl, 2-(Methoxycarbonyl)-ethyl, 2-(Ethoxycarbonyl)-ethyl, 2-(n-Butoxycarbonyl)-ethyl, Butylthiomethyl, 2-Dodecylthioethyl, 2-Phenylthioethyl, 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-dioxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-dioxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bei gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₂- bis C₁₈-Alkenyl handelt es sich bevorzugt um Vinyl, 2-Propenyl, 3-Butenyl, cis-2-Butenyl, trans-2-Butenyl oder CₙF_{2(n-a)-(1-b)}H_{2a-b} mit n ≤ 30, 0 ≤ a ≤ n und b = 0 oder 1.

Bei gegebenenfalls durch funktionelle Gruppen, Aryl, Alkyl, Aryloxy, Alkyloxy, Halogen, Heteroatome und/oder Heterocyclen substituiertes C₆- bis C₁₂-Aryl handelt es sich bevorzugt um Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethyl-phenyl, 2,6-Dimethoxyphenyl, 2,6-Dichlorphenyl, 4-Bromphenyl, 2-Nitrophenyl, 4-Nitro-phenyl, 2,4-Dinitrophenyl, 2,6-Dinitrophenyl, 4-Dimethylaminophenyl, 4-Acetylphenyl, Methoxyethylphenyl, Ethoxymethylphenyl, Methylthiophenyl, Isopropylthiophenyl oder tert.-Butylthiophenyl oder C₆F₍₅₋ₐ₎Hₐ mit 0 ≤ a ≤ 5.

Bei gegebenenfalls durch funktionelle Gruppen, Aryl, Alkyl, Aryloxy, Alkyloxy, Halogen, Heteroatome und/oder Heterocyclen substituiertes C₅₋ bis C₁₂-Cycloalkyl handelt es sich bevorzugt um Cyclopentyl, Cyclohexyl, Cyclooctyl, Cyclododecyl, Methylcyclöpentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl, CₙF_{2(n-a)-(1-b)}H_{2a-b} mit n ≤ 30, 0 ≤ a ≤ n und b = 0 oder 1 sowie ein gesättigtes oder ungesättigtes bicyclisches System wie z.B. Norbornyl oder Norbornenyl.

Bei gegebenenfalls durch funktionelle Gruppen, Aryl, Alkyl, Aryloxy, Alkyloxy, Halogen, Heteroatome und/oder Heterocyclen substituiertes C₅- bis C₁₂-Cycloalkenyl handelt es sich bevorzugt um 3-Cyclopentenyl, 2-Cyclohexenyl, 3-Cyclohexenyl, 2,5-Cyclohexa-dienyl oder CₙF_{2(n-a)-3(1-b)}H_{2a-3b} mit n ≤ 30, 0 ≤ a ≤ n und b = 0 oder 1.

Bei einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus handelt es sich bevorzugt um Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl oder Difluorpyridyl.

Bilden zwei benachbarte Reste gemeinsam einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring, so handelt es sich bevorzugt um 1,3-Propylen, 1,4-Butylen, 1,5-Pentylen, 2-Oxa-1,3-propylen, 1-Oxa-1,3-propylen, 2-Oxa-1,3-propylen, 1-Oxa-1,3-propenylen, 3-Oxa-1,5-pentylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen.

Enthalten die oben genannten Reste Sauerstoff- und/oder Schwefelatome und/oder substituierte oder unsubstituierte Iminogruppen, so ist die Anzahl der Sauerstoff- und/oder Schwefelatome und/oder Iminogruppen nicht beschränkt. In der Regel beträgt sie nicht mehr als 5 in dem Rest, bevorzugt nicht mehr als 4 und ganz besonders bevorzugt nicht mehr als 3.

Enthalten die oben genannten Reste Heteroatome, so befinden sich zwischen zwei Heteroatomen in der Regel mindestens ein Kohlenstoffatom, bevorzugt mindestens zwei Kohlenstoffatome.

### Besonders bevorzugt stehen die Reste R¹ bis R⁵ unabhängig voneinander für

- Wasserstoff;
- unverzweigtes oder verzweigtes, unsubstituiertes oder ein bis mehrfach mit Hydroxy, Halogen, Phenyl, Cyano, C₁- bis C₆-Alkoxycarbonyl und/oder Sulfonsäure substituiertes C₁- bis C₁₈-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-l-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, 2-Hydroxyethyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluo-rethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure;
- Glykole, Butylenglykole und deren Oligomere mit 1 bis 100 Einheiten und einem Wasserstoff oder einem C₁- bis C₈-Alkyl als Endgruppe, wie beispielsweise R^{A-}, O-(CHR^{B}-CH₂-O)ₙ-CHR^{B}-CH₂- oder R^{A-}O-(CH₂CH₂CH₂CH₂O)ₙ-CH₂CH₂CH₂CH₂O- mit R^{A} und R^{B} bevorzugt Wasserstoff, Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxa-undecyl, 3,6,9,12-Tetraoxatridecyl und 3,6,9,12-Tetraoxatetradecyl;
- Vinyl; und
- N,N-Di-C₁- bis C₆-alkyl-amino, wie beispielsweise N,N-Dimethylamino und N,N-Diethylamino.

Ganz besonders bevorzugt stehen die Reste R¹ bis R⁵ unabhängig voneinander für Wasserstoff oder C₁- bis C₁₈-Alkyl, wie beispielsweise Methyl, Ethyl, 1-Butyl, 1-Pentyl, 1-Hexyl, 1-Heptyl, 1-Octyl, für Phenyl, für 2-Hydroxyethyl, für 2-Cyanoethyl, für 2-(Methoxycarbonyl)ethyl, für 2-(Ethoxycarbonyl)ethyl, für 2-(n-Butoxycarbonyl)ethyl, für N,N-Dimethylamino, für N,N-Diethylamino, für Chlor sowie für CH₃O-(CH₂CH₂O)ₙ-CH₂CH₂- und CH₃CH₂O-(CH₂CH₂O)ₙ-CH₂CH₂- mit n gleich 0 bis 3.

Als ganz besonders bevorzugte Imidazoliumionen (IVe) seien genannt 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethyl-imidazolium, 1-(1-Hexyl)-3-butyl-imidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,4-Dimethylimidazolium, 1,3,4-Trimethylimidazolium, 1,4-Di-methyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octyl-imidazolium.

Ganz besonders bevorzugt setzt man als Pyrazoliumionen (IVf), (IVg) beziehungsweise (IVg') solche ein, bei denen
- R¹ Wasserstoff, Methyl oder Ethyl ist und R² bis R⁴ unabhängig voneinander Wasserstoff oder Methyl sind.

Ganz besonders bevorzugt setzt man als Pyrazoliumionen (IVh) solche ein, bei denen
- R¹ bis R⁴ unabhängig voneinander Wasserstoff oder Methyl sind.

Ganz besonders bevorzugt setzt man als Guanidiniumionen (IVv) solche ein, bei denen
- R¹ bis R⁵ Methyl sind.

Als ganz besonders bevorzugtes Guanidiniumion (IVv) sei genannt N,N,N',N',N",N"-Hexamethylguanidinium.

Als Anionen sind prinzipiell alle Anionen einsetzbar.

Als Ionische Flüssigkeit im Sinn der Erfindung werden Substanzen mit einem weichen Kation und vorzugsweise einem weichen Anion eingesetzt. Das bedeutet, dass Kationen und vorzugsweise Anionen gut stabilisiert sind, beispielsweise durch induktive und/oder mesomere Effekte. Kationen weisen dabei bevorzugt elektronenschiebende Substituenten auf. Vorzugsweise enthält das Kation ausschließlich elektronenschiebende Substituenten. Das Anionen weist vorzugsweise elektronenziehende Substituenten auf. Dabei wird besonders bevorzugt eine ionische Flüssigkeit eingesetzt, bei der die Ladung des Kations, des Anions oder des Kations und des Anions durch mesomere Effekte delokalisiert ist. Als Kationen sind daher Imidazolium-, Guanidinium- oder Pyrazoliumderivate bevorzugt. Besonders bevorzugt weisen erfindungsgemäße ionische Flüssigkeiten Kationen auf, ausgewählt aus der Gruppe, enthaltend 1,2,3-Trimethylimidazolium, 1,3,4,5-Tetramethylimidazolium, 1,3,4-Trimethylimidazolium, 1,3-Dibutyl-2-methylimidazolium, 1,3-Dibutylimidazolium, 1,2-Dimethylimidazolium, 1,3-Dimethylimidazolium, 1-Benzyl-3-methylimidazolium, 1-Butyl-2,3-dimethylimidazolium, 1-Butyl-2-ethyl-5-methylimidazolium, 1-Butyl-2-ethylimidazolium, 1-Butyl-2-methylimidazolium, 1-Butyl-3,4,5-trimethylimidazolium, 1-Butyl-3,4-dimethylimidazolium, 1-Butyl-3-ethylimidazolium, 1-Butyl-3-methylimidazolium, 1-Butyl-4-methylimidatolium, 1-Butylimidazolium, 1-Decyl-3-methylimidazolium, 1-Dodecyl-3-methylimidazolium, 1-Ethyl-2,3-dimethylimidazolium, 1-Ethyl-3-methylimidazolium, 1-Hexadecyl-2,3-dimethylimidazolium, 1-Hexadecyl-3-methylimidazolium, 1-Hexyl-2,3-dimethylimidazolium, 1-Hexyl-3-methylimidazolium, 1-Methyl-2-ethylimidazolium, 1-Methyl-3-octylimidazolium, 1-Methylimidazolium, 1-Pentyl-3-methylimidazolium, 1-Phenylpropyl-3-methylimidazolium, 1-Propyl-2,3-dimethylimidazolium, 1-Tetradecyl-3-methylimidazolium, 2,3-Dimethylimidazolium, 2-Ethyl-3,4-dimethylimidazolium, 3,4-Dimethylimidazolium, Guanidinium, Hexamethylguanidinium, N,N,N',N'-Tetramethyl-N"-ethylguanidinium, N-Pentamethyl-N-isopropylguanidinium und, N-Pentamethyl-N-propylguanidinium.

Noch stärker bevorzugte Kationen sind ausgewählt aus der Gruppe, enthaltend 1,2,3-Trimethylimidazolium, 1,2-Dimethylimidazolium, 1-Butyl-2-methylimidazolium, 1-Butyl-4-methylimidazolium, 1,3-Diethylimidazolium, 1-Benzyl-3-methylimidazolium, 1-Butyl-2,3-dimethylimidazolium, 1-Butyl-2-methylimidazolium, 1-Butyl-3-ethylimidazolium, 1-Butyl-3-methylimidazolium, 1-Butylimidazolium, 1-Ethyl-2,3-dimethylimidazolium, 1-Ethyl-3-methylimidazolium, 1-Hexyl-3-methylimidazolium, 1-Methyl-2-ethylimida-zolium, 1-Methyl-3-octylimidazolium, 1-Methylimidazolium, 1-Decyl-3-methylimida-zolium, 1-Dodecyl-3-methylimidazolium, Guanidinium, und N,N,N',N'-Tetramethyl-N"-ethylguanidinium.

Insbesondere sind die Kationen ausgewählt aus der Gruppe, enthaltend 1,2,3-Trimethylimidazolium, 1,2-Dimethylimidazolium, 1-Butyl-2,3-dimethylimidazolium, 1-Butyl-3-methylimidazolium, 1-Ethyl-2,3-dimethylimidazolium, 1-Ethyl-3-methylimidazolium, 1-Butylimidazolium und 1-Methylimidazolium.

Die Anionen werden für das erfindungsgemäße Verfahren vorzugsweise ausgewählt aus der Gruppe, enthaltend Acetat, Bis(2,4,4-trimethylpentyl)phosphinat, Bis(malonato)borat, Bis(oxalato)borat, Bis(pentafluoroethyl)phosphinat, Bis(phtalato)borat, Bis(salicylato)borat, Bis(trifluoromethansulfonyl)imidat, Bis(trifluoromethyl)imidat, Borat, Bromid, Bromoaluminate, Carbonat, Chloroaluminate, Decylbenzolsulfonat, Dichlorocuprat, Dicyanamid, Didecylbenzolsulfonat, Didodecylbenzolsulfonat, Diethylphosphat, Dihydrogenphosphat, Dodecylbenzolsulfonat, Ethylsulfat, Ethylsulfonat, Fluorid, Hexafluorophosphat, Hydrogencarbonat, Hydrogenphosphat, Hydrogensulfat, Hydrogensulfit, lodid, Methylsulfat, Methylsulfonat, Nitrat, Nitrit, Phosphat, Sulfit, Tetracyanoborat, Tetrafluoroborat, Tetrakis(hydrogensulfato)borat, Tetrakis(methylsulfonato)borat, Thiocyanat, Tosylat, Trichlorozinkat, Trifluoroacetat, Trifluoromethylsulfonat, Tris(heptafluoropropyl)trifluorophosphat, Tris(nonafluorobutyl)trifluorophosphat, Tris(pentafluoroethyl)trifluorophosphat, Tris(pentafluoroethylsulfonyl)trifluorophosphat.

Besonders bevorzugte Anionen sind Hexafluorphosphat, Tetrafluorborat, Thiocyanat und Dicyanamid, Ethylsulfat, Diethylphosphat, Methylsulfat, Bromid, Jodid, p-Toluolsulfonat und Methansulfonat .

Insbesondere werden als Ionische Flüssigkeiten im Sinn der Erfindung 1-Ethyl-3-methylimidazolmethylsulfonat, 1-Ethyl-3-methylimidazoldicyanamid, 1-Ethyl-3-methylimidazolethylsulfat, 1-Ethyl-3-methylimidazolthiocyanat, 1-Ethyl-3-methylimidazoliumtetrafluoroborat und 1-Ethyl-3-methylimidazoliumhexafluorophosphat, 1-Ethyl-3-methylimidazoliumdiethylphosphat, 1-Ethyl-3-methylimidazoliumbromid, 1-Ethyl-3-methylimidazolium-*p*-toluolsulfonat sowie 1-Butyl-3-methylimidazoliummethansulfonat, 1- Butyl-3-methylimidazoliumdicyanamid, 1- Butyl-3-methylimidazoliumethylsulfat, 1- Butyl-3-methylimidazoliumthiocyanat, 1-Butyl-3-methylimidazoliumdimethylphosphat, 1- Butyl-3-methylimidazoliumbromid, 1-Butyl-3-methylimidazolium-*p*-toluolsulfonat, 1-Butyl-3-methylimidazoliumtetrafluoroborat und 1-Butyl-3-methylimidazoliumhexafluorophosphat verwendet.

Als erfindungsgemäßes antistatisches Additiv kann diese ionische Flüssigkeit alleine oder zusammen mit weiteren antistatischen Additiven eingesetzt werden. Hier sind beispielsweise Kombinationen von ionischen Flüssigkeiten untereinander oder von ionischen Flüssigkeiten mit anderen bekannten antistatischen Additiven, wie Catafor F® oder Catafor PU® der FirmaRhodia. genannt werden.

Vorzugsweise ist das antistatische Additiv im antistatischen Polyurethan in einer Menge von 0,001 bis 30 Gewichtsprozent, besonders bevorzugt von 0,01 bis 20 Gewichtsprozent ganz besonders bevorzugt von 0,1 bis 10 Gewichtsprozent und insbesondere von 0,1 bis 7 Gewichtsprozent, bezogen auf das Gesamtgewicht des Polyurethans, enthalten. Dabei nimmt der Durchgangswiderstand des antistatischen Polyurethans vor allem bei Zusatz der ionischen Flüssigkeit bis 10 Gewichtsprozent stark zu. Das Gesamtgewicht des antistatischen Polymers setzt sich dabei aus dem Gewicht der Polymerketten sowie gegebenenfalls enthaltenen Katalysatoren, Füll- und Zusatzstoffen zusammen. Die ionische Flüssigkeit ist dabei vorzugsweise nicht kovalent an die Polymerkette des antistatischen Polymers gebunden.

Als Polyurethane, die eine ionische Flüssigkeit enthalten, können alle bekannten Polyisocyanat-Polyadditionsprodukte verwendet werden. Diese umfassen insbesondere thermoplastische Polyurethane und elastomere Polyurethane sowie Schaumstoffe auf Basis dieser Polyurethane. Weiter sind unter Polyurethanen im Sinn der Erfindung Polymerblends, enthaltend Polyurethane und weitere Polymere, sowie Schaumstoffe aus diesen Polymerblends zu verstehen. Besonders bevorzugt sind die ionischen Flüssigkeiten in einem Polyurethanschaumstoff, insbesondere in einem Formschaumstoff mit einer verdichteten Randzone, einem sogenannten Integralschaumstoff, enthalten.

Die Herstellung von Polyurethanen, insbesondere von Integralschaumstoffen auf Pölyurethanbasis, ist allgemein bekannt. Erfindungsgemäße antistatische Polyurethane sind herstellbar durch Umsetzung von a) organischen und/oder modifizierten Polyisocyanaten mit (b) mindestens einer höhermolekularen Verbindung mit mindestens zwei reaktiven Wasserstoffatomen, c) gegebenenfalls niedermolekularen Kettenverlängerern und/oder Vernetzern, d) antistatischem Additiv, enthaltend ionische Flüssigkeiten, e) Katalysatoren, f) gegebenenfalls Treibmittel und g) gegebenenfalls sonstigen Zusatzstoffen. Dabei ist unter "umsetzen" zu verstehen, dass die oben genannten Komponenten vermischt werden und aus dieser Mischung das Polyurethan hergestellt wird. Es ist nicht beabsichtigt zwischen reagierenden und nicht reagierenden Komponenten zu unterscheiden.

Die zur Herstellung der erfindungsgemäßen Polyisocyanat-Polyadditionsprodukte verwendete Polyisocyanatkomponente (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Toluylendiisocyanat TDI) oder Mischungen daraus.

Bevorzugt wird 4,4'-MDI und/oder HDI verwendet. Das besonders bevorzugt verwendete 4,4'-MDI kann geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymere eingesetzt. Diese Polyisocyanatprepolymere sind erhältlich, indem vorstehend beschriebene Polyisocyanate (a-1), beispielsweise bei Temperaturen von 30 bis 100 C, bevorzugt bei etwa 80°C, mit Polyolen (a-2), zum Prepolymer umgesetzt werden. Vorzugsweise wird zur Herstellung der erfindungsgemäßen Prepolymere 4,4'-MDI zusammen mit urethionmodifiziertem MDI und handelsüblichen Polymerpolyolen auf Basis von Polyestern, beispielsweise ausgehend von Adipinsäure, oder Polyethern, beispielsweise ausgehend von Ethylenoxid oder Propylenoxid, verwendet.

Polyole (a-2) sind dem Fachmann bekannt und beispielsweise beschrieben in "Kunststoffhandbuch, 7, Polyurethane", Carl Hansel Verlag, 3. Auflage 1993, Kapitel 3.1.

Prepolymere auf Etherbasis werden vorzugsweise erhalten durch Umsetzung von Polyisocyanaten (a-1) mit 2- bis 3-funktionelle Polyoxypropylen- und Polyoxypropylen-Polyoxyethylenpolyolen. Ihre Herstellung erfolgt zumeist durch die allgemein bekannte basisch katalysierte Anlagerung von Propylenoxid allein oder im Gemisch mit Ethylenoxid an H-funktionelle, insbesondere OH-funktionelle Startsubstanzen. Als Startsubstanzen dienen beispielsweise Wasser, Ethylenglykol oder Propylenglykol beziehungsweise Glycerin oder Trimethylolpropan. Beispielsweise können als Komponente (a-2) Polyether verwendet werden, wie sie nachstehend unter (b) beschrieben sind.

Bei Verwendung von Ethylenoxid/Propylenoxidmischungen wird das Ethylenoxid bevorzugt in einer Menge von 10-50 Gew.-%, bezogen auf die Gesamtmenge an Alkylenoxid, eingesetzt. Der Einbau der Alkylenoxide kann hierbei blockweise oder als statistisches Gemisch erfolgen. Besonders bevorzugt ist der Einbau eines Ethylenoxid-Endblocks ("EO-cap"), um den Gehalt an reaktiveren primären OH-Endgruppen zu erhöhen.

Bevorzugt eingesetzt werden Diole, basierend auf Polyoxypropylen mit ca. 20 Gew.-% Polyoxyethyleneinheiten am Kettenende, so dass mehr als 80% der OH-Gruppen primäre OH-Gruppen sind. Das Molekulargewicht dieser Diole liegt vorzugsweise zwischen 2000 und 4500.

Prepolymere auf Esterbasis werden vorzugsweise erhalten durch Umsetzung von 4,4'-MDI zusammen mit uretoniminmodifiziertem MDI und handelsüblichen Polymerpolyolen auf Basis von Polyestern, beispielsweise ausgehend von Adipinsäure. Dabei beträgt der Anteil an modifiziertem MDI an der Gesamtmenge des zur Herstellung des Prepolymers verwendeten MDIs vorzugsweise von 0 bis 25 Gew.-%, besonders bevorzugt von 1 bis 20 Gew.-%. Das Polyol-Polyisocyanat-Verhältnis wird hierbei so gewählt, dass der NCO-Gehalt des Prepolymers 8 bis 28 Gew.-%, vorzugsweise 14 bis 26 Gew.-%, besonders bevorzugt 16 bis 22 Gew.-% beträgt. Um Nebenreaktionen durch Luftsauerstoff auszuschließen, kann die Umsetzung unter Inertgas, vorzugsweise Stickstoff, durchgeführt werden. Die verwendeten Polyesterole weisen bevorzugt eine OH-Zahl von 10 bis 100, bevorzugt von 20 bis 60 auf. Ferner weisen sie im allgemeinen eine theoretische Funktionalität 1,9 bis 4, bevorzugt von 1,9 bis 3 auf.

In einer Ausführungsform können als Komponente (a-2) die nachstehend unter der Beschreibung der Komponente (b) erläuterten Polyesterole eingesetzt werden. Dabei ist es bevorzugt, dass die Komponente (a-2) weniger als 10 Gew.-% Polyetherole, bezogen auf das Gesamtgewicht der Komponente (a-2) enthält. Insbesondere enthält die Komponente (a-2) keine Polyetherole und besteht besonders bevorzugt nur aus Polyesterolen.

In einer weiteren Ausführungsform werden als Komponente (a-2) verzweigte Polyesterole verwendet. Die verzweigten Polyesterole weisen bevorzugt eine Funktionalität von mehr als 2 bis 3, insbesondere von 2,2 bis 2,8 auf. Des weiteren weisen die verzweigten Polyesterole bevorzugt ein zahlenmittleres Molekulargewicht von 500 bis 5000 g/mol, besonders bevorzugt von 2000 bis 3000 g/mol auf. Bezüglich der zur Herstellung des verzweigten Polyesters (a-2) verwendeten Einsatzstoffe (Säuren und Alkohole) wird auf die nachfolgenden Ausführungen zur Komponente (b) verwiesen. Gegebenenfalls können der Umsetzung zum Polyisocyanatprepolymer sowohl bei Polyethersystemen als auch bei Polyestersystemen noch Kettenverlängerungsmittel (a-3) zugegeben werden. Als Kettenverlängerungsmittel für das Prepolymer (a-3) sind zweioder dreiwertige Alkohole, bevorzugt verzweigte zwei- oder der dreiwertige Alkohole mit einem Molekulargewicht von weniger als 450 g/mol, besonders bevorzugt weniger als 400 g/mol, geeignet. Bevorzugt verwendet werden Dipropylenglykol und/oder Tripropylenglykol. Ferner sind Addukte von Dipropylenglykol und/oder Tripropylenglykoi mit Alkylenoxiden, bevorzugt Propylenoxid, geeignet.

Als höhermolekulare Verbindungen (b) mit mindestens zwei reaktiven Wasserstoffatomen werden zweckmäßigerweise solche mit einer Funktionalität von 2 bis 8 und einem Molekulargewicht von 400 bis 12000 verwendet. Bewährt haben sich z.B. Polyetherpolyamine und/oder vorzugsweise Polyole, ausgewählt aus der Gruppe der Polyetherpolyole, Polyesterpolyole, hergestellt aus Alkandicarbonsäuren und mehrwertigen Alkoholen, Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole. Als höhermolekulare Verbindungen (b) mit mindestens zwei reaktiven Wasserstoffatomen ungeeignet sind hingegen Alkydharze oder Polyesterformmassen mit reaktiven, olefinisch ungesättigten Doppelbindungen.

Geeignete Polyesterpolyole können beispielsweise aus Alkandicarbonsäuren mit 2 bis 12 Kohlenstoffatomen, vorzugsweise Alkandicarbonsäuren mit 4 bis 6 Kohlenstoffatomen oder Mischungen aus Alkandicarbonsäuren und aromatischen Polycarbonsäuren und mehrwertigen Alkoholen, vorzugsweise Diolen mit 2 bis 12 Kohlenstoffatomen, vorzugsweise 2 bis 6 Kohlenstoffatomen, und/oder Alkylenglykolen hergestellt werden. Als Alkandicarbonsäuren kommen beispielsweise in Betracht: Bernsteinsäure, Glutarsäure, Adipinsäure, Korksäure, Azelainsäure, Sebacinsäure und Decandicarbonsäure. Geeignete aromatische Polycarbonsäuren sind z.B. Phthalsäure, Isophthalsäure und Terephthalsäure. Die Alkandicarbonsäuren können dabei sowohl einzeln als auch im Gemisch untereinander verwendet werden. Anstelle der freien Dicarbonsäuren können auch die entsprechenden Dicarbonsäurederivate, wie Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole oder Alkylenglykole sind: Ethandiol, Diethylenglykol, 1,2-bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die Mischungen aus aromatischen und aliphatischen Dicarbonsäuren und vorzugsweise Alkandicarbonsäuren und/oder - derivaten und mehrwertigen Alkoholen katalysatorfrei oder vorzugsweise in Gegenwart von Veresterungskatalysatoren, zweckmäßigerweise in einer Atmosphäre aus Inertgasen, wie Stickstoff, Helium, Argon u.a., in der Schmelze bei Temperaturen von 150 bis 250 °C, vorzugsweise 180 bis 220 °C gegebenenfalls unter vermindertem Druck bis zu der gewünschten Säurezahl, die vorteilhafterweise kleiner als 10, besonders bevorzugt kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 hPa, vorzugsweise 50 bis 150 hPa, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1:1 bis 1:1,8, vorzugsweise 1:1,05 bis 1:1,2 polykondensiert.

Die erhaltenen Polyesterpolyole besitzen vorzugsweise eine Funktionalität von 2 bis 4, insbesondere 2 bis 3 und ein Molekulargewicht von 480 bis 3000, vorzugsweise 1200 bis 3000 und insbesondere 1800 bis 2500.

Geeignete Polyetherpolyole können nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat, oder Kaliumisopropylat als Katalysatoren und unter Zusatz mindestens eines Startermoleküls, das 2 bis 8 reaktive Wasserstoffatome gebunden enthält, oder durch kationische Polymerisation mit Lewis-Säuren, wie Antimonpentachlorid, Borfluorid-Etherat u.a., oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- bis achtwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.

Die Polyetherpolyole, vorzugsweise Polyoxypropylen- und Polyoxypropylenpolyoxyethylenpolyole, besitzen zur Herstellung von elastischen oder halbharten, zelligen Polyisocyanat-Polyadditionsprodukten eine Funktionalität von vorzugsweise 2 bis 4 und insbesondere 2 und/oder 3 und Molekulargewichte von vorzugsweise 1800 bis 6000 und insbesondere 2400 bis 4000 und geeignete Polyoxytetramethylenglykole ein Molekulargewicht bis ungefähr 3500 und zur Herstellung von harten, zelligen Polyisocyanat-Polyadditionsprodukten, insbesondere Duromeren, eine Funktionalität von vorzugsweise 3 bis 8, und insbesondere 3 bis 6 und ein Molekulargewicht und vorzugsweise 400 bis 3200 und insbesondere 600 bis 2400.

Die Polyetherpolyole können ebenso wie die Polyesterpolyole einzeln oder in Form von Mischungen verwendet werden. Zur Herstellung von elastischen Duromeren kann es z.B. zweckmäßig sein, geeignete Mischungen aus Polyetherpolyolen mit Molekulargewichten bis 2400 und solchen mit Molekulargewichten von 2800 bis 4000 zu verwenden. Ferner können sie mit den Pfropf-Polyetherpolyolen oder Polyesterpolyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethyl-. englykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyether-polyamine können aus den obengenannten Polyetherpolyolen nach bekannten Verfahren hergestellt werden. Beispielhaft genannt seien die Cyanoalkylierung von Polyoxyalkylenpolyolen und anschliessende Hydrierung des gebildeten Nitrils (US 3 267 050) oder die teilweise oder vollständige Aminierung von Polyoxyalkylenpolyolen mit Aminen oder Ammoniak in Gegenwart von Wasserstoff und Katalysatoren (DE 12 15 373).

Als Polyole eignen sich ferner polymermodifizierte Polyole, vorzugsweise polymermodifizierte Polyesterole oder Poyetherole, besonders bevorzugt Pfropf-Polyether- bzw. Pfropf-Polyesterole. Hierbei handelt es sich um ein sogenanntes Polymerpolyol, welches üblicherweise einen Gehalt an, bevorzugt thermoplastischen, Polymeren von 5 bis 50 Gew.-%, bevorzugt 10 bis 45 Gew.-%, besonders bevorzugt 15 bis 25 Gew.-% und insbesondere 18 bis 22 Gew.-%, aufweist. Diese Polymerpolyesterole sind beispielsweise in EP-A-250 351 beschrieben und werden üblicherweise durch radikalische Polymerisation von geeigneten olefinischen Monomeren, beispielsweise Styrol, Acrylnitril, Acrylaten und/oder Acrylamid, in einem als Pfropfgrundlage dienenden Polyesterol hergestellt. Die Seitenketten entstehen im allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol.

In einer bevorzugten Ausführungsform werden als Monomere Acrylnitril, Styrol, insbesondere ausschließlich Styrol verwendet. Die Monomere werden gegebenenfalls in Gegenwart weiterer Monomerer, eines Makromers, eines Moderators und unter Einsatz eines Radikal-Initiators, meist Azo- oder Peroxidverbindungen, in einem Polyesterol als kontinuierlicher Phase polymerisiert.

Während der radikalischen Polymerisation werden die Makromere mit in die Copolymerkette eingebaut. Dadurch bilden sich Blockcopolymere mit einem Polyester- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 15 Gew.-%, bezogen auf das Gesamtgewicht der zur Herstellung des Polymerpolyols eingesetzten Monomere.

Vorzugsweise ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b) in einer Menge von 30 bis 90 Gew.-%, oder von 55 bis 80 Gew.-% enthalten sein. Besonders bevorzugt handelt es sich bei dem Polymerpolyol um Polymerpolyesterol oder Polyetherol.

Die Polyisocyanat-Polyadditionsprodukte und vorzugsweise Urethan- oder Urethan- und Isocyanuratgruppen enthaltende Integralschaumstoffe können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300 und insbesondere 60 bis 150. In Betracht kommen beispielsweise aliphatische, cycloaliphatische und/oder araliphatische Diole mit 2 bis 14, vorzugsweise 2 bis 10 Kohlenstoffatomen, wie Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle.

Zur Herstellung zelliger Polyurethan-Polyharnstoff-Elastomerer können neben den oben genannten Diolen und/oder Triolen oder im Gemisch mit diesen als Kettenverlängerungs- oder Vernetzungsmittel auch sekundäre aromatische Diamine, primäre aromatische Diamine, 3,3'-di- und/oder 3,3',5,5'-tetraalkylsubstituierte Diaminodiphenylmethane Anwendung finden.

Die genannten Kettenverlängerungsmittel und/oder Vernetzungsmittel (c) können einzeln oder als Mischungen von gleichen oder verschiedenen Verbindungsarten verwendet werden.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 4 bis 50 Gew.-% und insbesondere 5 bis 40 Gew.-%, bezogen auf das Gewicht der Komponenten (b) und (c) zum Einsatz.

Die Umsetzung der Komponenten a) und (b) und gegebenenfalls (c) erfolgt in Gegenwart eines erfindungsgemäßen antistatischen Additivs (d).

Als Katalysatoren (e) zur Herstellung der Polyisocyanat-Polyadditionsprodukte, insbesondere der zelligen Kunststoffe nach dem Polyisocyanat-Polyadditionsverfahren, werden bevorzugt Verbindungen verwendet, welche die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B.Dibutyl-zinndiacetat, Dibutylzinndilaurat, Dibutylzinnmaleat und Dioctylzinn-diacetat, sowie Bismutcarboxylate, wie Bismut(III)-neodecanoat, Bismut-2-etyhlhexanoat und Bismut-octanoat oder Mischungen davon. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiämin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Handelt es sich bei der Komponenete (b) um einen Ester, werden vorzugsweise ausschließlich Aminkatalysatoren eingesetzt.

Insbesondere bei Verwendung eines größeren Polyisocyanatüberschusses kommen als Katalysatoren ferner in Betracht: Tris-(dialkylaminoalkyl)-s-hexahydrotriazine, vorzugsweise Tris-(N,N-dimethylaminopropyl)-s-hexahydrotriazin, Tetraalkylammonium-hydroxide, wie Tetramethylammoniumhydroxid, Alkalihydroxide, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Ferner sind bei der Herstellung von zelligen Polyurethanen üblicherweise Treibmittel (f) zugegen. Vorzugsweise enthalten diese Treibmittel Wasser (als Bestandteil (f-1) bezeichnet). Als Treibmittel (f) können neben bzw. an Stelle von Wasser (f-1) noch zusätzlich allgemein bekannte chemisch oder physikalisch wirkende Verbindungen eingesetzt werden (diese werden als Bestandteil (f-2) bezeichnet). Beispiele für physikalische Treibmittel sind inerte (cyclo)aliphatische Kohlenwasserstoffe mit 4 bis 8 Kohlenstoffatomen, die unter den Bedingungen der Polyurethanbildung verdampfen. Ferner können auch Fluorkohlenwasserstoffe, wie Solkane^{®} 365 mfc, als Treibmittel eingesetzt werden. In einer bevorzugten Ausführungsform wird als Treibmittel eine Mischung dieser Treibmittel, enthaltend Wasser eingesetzt, insbesondere Wasser als alleiniges Treibmittel.

In einer bevorzugten Ausführungsform wird Wasser (f-1) in einer Menge von 0,1 bis 2 Gew.-%, bevorzugt 0,2 bis 1.5 Gew.-%, besonders bevorzugt 0,3 bis 1.2 Gew.-%, insbesondere 0.4 bis 1 Gew.-%, bezogen auf das Gesamtgewicht der Komponenten (b) und falls vorhanden (c), eingesetzt.

In einer weiteren bevorzugten Ausführungsform werden der Umsetzung der Komponenten (a), (b) und gegebenenfalls (c) als zusätzliches Treibmittel (f-2) Mikrokugeln, die physikalisches Treibmittel enthalten, zugegeben. Die Mikrokugeln können auch im Gemisch mit den vorstehend genannten zusätzlichen Treibmitteln (f-2) eingesetzt werden.

Die Mikrokugeln (f-2) bestehen üblicherweise aus einer Hülle aus thermoplastischem Polymer und sind im Kern mit einem flüssigen, niedrig siedenden Substanz auf Basis von Alkanen gefüllt. Die Herstellung solcher Mikrokugeln ist beispielsweise in US 3 615 972 beschrieben. Die Mikrokugeln weisen im allgemeinen einen Durchmesser von 5 bis 50 µm auf. Beispiele für geeignete Mikrokugeln sind unter dem Handelsnamen Expancell® der Firma Akzo Nobel erhältlich.

Die Mikrokugeln werden im allgemeinen in einer Menge von 0,5 bis 5 %, bezogen auf das Gesamtgewicht der Komponenten (b), gegebenenfalls (c), und (f) zugesetzt.

Der Reaktionsmischung zur Herstellung der Polyisocyanat-polyadditionsprodukte, insbesondere der zelligen Kunststoffe nach dem Polyisocyanat-Polyadditionsverfahren können gegebenenfalls auch noch Hilfsmittel und/oder Zusatzstoffe (f) zugegeben werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wieCarbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 (EP-A-153 639), Gemischen aus organischen Aminen, Metallsalzen der Stearinsäure und organischen Mono- und/oder Dicarbonsäuren oder deren Anhydride (DE-A-3 607 447) oder Gemischen aus einer Iminoverbindung, dem Metallsalz einer Carbonsäure und gegebenenfalls einer Carbonsäure (US 4 764 537).

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), zugegeben, wobei jedoch der Gehalt an Matten, Vliesen und Geweben aus natürlichen und synthetischen Fasern Werte bis 80 Gew.-% erreichen kann.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammäniumpolyphosphat und Calciumsulfat oder Cyanursäurederivate, wie Melamin, oder Mischungen aus mindestens zwei Flammschutzmi tteln, wie Ammoniumpolyphosphaten und Melamin, sowie gegebenenfalls Stärke, z.B. Maisstärke, zum Flammfestmachen der Polyisocyanat-polyadditionsprodukte verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponente (b) zu verwenden.

Zur Herstellung der zelligen Harnstoff- und/oder vorzugsweise Urethangruppen enthaltenden Kunststoffe werden die organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, dass das Äquivalenz-Verhältnis von NCO-Gruppen der Polyisocyanate (a) zur Summe der reaktiven Wasserstoffatome der Komponenten (b) und gegebenenfalls (c) und (f) 0,85 bis 1,25:1, vorzugsweise 0,90 bis 1,15:1 beträgt. Falls die zelligen Kunststoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) und (f) von 1,5 bis 20:1, vorzugsweise 1,5 bis 8:1 angewandt. Ein Verhältnis von 1:1 entspricht dabei einem Isocyanatindex von 100.

Die zelligen Kunststoffe aus Polyisocyanat-polyadditionsprodukten, vorzugsweise zelligen Elastomeren oder insbesondere Polyurethanschaumstoffe werden vorteilhafterweise nach dem one shot-Verfahren, beispielsweise mit Hilfe der Reaktionsspritzguss-, Hochdruck- oder Niederdruck-Technik in offenen oder geschlossenen Formwerkzeugen, beispielsweise metallischen Formwerkzeugen, z.B. aus Aluminium, Gusseisen oder Stahl, hergestellt. Als besonders vorteilhaft hat es sich erwiesen, nach dem Zweikomponenten-Verfahren zu arbeiten und die Aufbaukomponenten (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90 °C, vorzugsweise von 20 bis 50 °C gemischt und in das offene oder gegebenenfalls unter erhöhtem Druck in das geschlossene Formwerkzeug eingebracht. Die Vermischung kann, wie bereits dargelegt wurde, mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 90 °C, vorzugsweise 30 bis 60 °C und insbesondere 45 bis 50 °C.

Nach bevorzugten Ausführungsformen werden die zelligen Polyurethane, insbesondere zelligen Elastomeren, mit Hilfe der Reaktionsspritzgusstechnik in einem geschlossenen Formwerkzeug und die Formkörper mit einer verdichteten Randzone und einem zelligen Kern in einem geschlossenen Formwerkzeug unter Verdichtung mit einem Verdichtungsgrad von 1,5 bis 8,5, vorzugsweise 2 bis 6 hergestellt.

Die nach dem erfindungsgemäßen Verfahren hergestellten zelligen Elastomeren sowie die entsprechenden Integralschaumstoffe besitzen Dichten von ungefähr 0,45 bis 1,2 g/cm³, vorzugsweise von 0,45 bis 0,85 g/cm³, wobei die Dichte von füllstoffhaltigen Produkten höhere Werte, z.B. bis 1,4 g/cm³ und mehr erreichen kann. Formkörper aus derartigen antistatischen, zelligen Elastomeren finden hauptsächlich Verwendung zwischen zwei Festkörpern, zwischen denen eine statische Aufladung verhindert werden soll, beispielsweise in tragenden oder dämpfenden Elementen, wie Rollen, Dämpfungselementen, Bodenbelägen und Bodenmatten für Büro- und Arbeitsbereiche, Folien, Automobilinnenteilen, wie Fußmatten, Lenkräder und Armstützen, Matratzen für den Operationsbereich, Armlehnen für Stühle, die beispielsweise bei der Herstellung von elektronischen Bauteilen verwendet werden, oder Schuhsohlen, wobei diese Elemente eine statische Aufladung verhindern sollen. Die vorliegende Erfindung umfasst daher Rollen, Dämpfungselementen, Bodenbeläge, Folien und Automobilinnenteile, enthaltend ein erfindungsgemäßes antistatisches Polyurethan. Insbesondere werden die erfindungsgemäßen Formkörper als Laufsohle und/oder Zwischensohle von Schuhen, speziell von antistatischen Sicherheitsschuhen verwendet. Gegenstand der Erfindung ist daher auch eine Schuhsohle, enthaltend ein antistatisches Polyurethan als Zwischensohle und/oder Laufsohle, und ein Sicherheitsschuh nach DIN EN 20344-1 der eine erfindungsgemäße Schuhsohle aufweist.

Weiter sind nach dem erfindungsgemäßen Verfahren hergestellten weichelastische und halbharte Schaumstoffe sowie die entsprechenden Integralschaumstoffe mit einer Dichte von 0,02 bis 0,45 g/cm³ erhältlich, wobei die Dichten der weichelastischen Schaumstoffe vorzugsweise 0,025 bis 0,24 g/cm³ und insbesondere 0,03 bis 0,1 g/cm³ betragen. Die Gesamtdichten der halbharten Schaumstoffe und Integralschaumstoffe betragen vorzugsweise 0,2 bis 0,9 g/cm³, und insbesondere 0,35 bis 0,8 g/cm³ . Diese können beispielsweise im Automobilinnenraum verwendet werden.

Kompakte antistatische Polyurethane und antistatische thermoplastische Polyurethane werden vorzugsweise als Schuhsohlen, insbesondere als Laufsohlen, Rollen, Folien oder Bodenbeläge eingesetzt.

Die erfindungsgemäßen antistatischen, zelligen Polyisocyanat-Additionsprodukte, zeichnen sich dadurch aus, dass diese bei einem Zusatz von nur 2,5 Gew.%, bezogen auf das Gesamtgewicht des Schaumstoffs, einen Durchgangswiderstand von 10⁷ Ω/cm und weniger, vorzugsweise 5*10⁶ Ω/cm und weniger und insbesondere 1*10⁶ Ω/cm und weniger aufweisen: Dabei können durch übliche Rezepturanpassungen, wie Anpassung des Vernetzeranteils, bei Polyisocyanat-Polyadditionsprodukten enthaltend ionische Flüssigkeiten, selbst bei Zugaben von 10 Gew.-% ionischen Flüssigkeiten, bezogen auf das Gesamtgewicht der Komponenten (a) bis (g), die im wesentlichen gleichen mechanischen Kenngrößen, wie Rückprallelastizität nach DIN 53512, Zugfestigkeit und Dehnung nach DIN 53504, Härte Shore. A nach DIN 53505, Weiterreißfestigkeit nach DIN 53507, Dauerbiegeeigenschaften nach DIN 53543 und Quellung nach DIN EN 344-1 erhalten werden, wie ohne Zugabe der ionischen Flüssigkeit. Ferner sind auch die reaktionsspezifischen Kenngrößen, wie Startzeiten, Steigzeiten und Knickzeiten bei Systemen, enthaltend eine ionischen Flüssigkeit bis zu einem Massenanteil von 10 Gew.-%, bezogen auf das Gesamtgewicht der Komponenten (a) bis (g), nach der Anpassung der Systeme im wesentlichen unverändert gegenüber diesen Kenngrößen üblicher Systeme ohne antistatische Additive. Schließlich ist der Durchgangswiderstand der erfindungsgemäßen Polyisocyanat- Polyadditionsprodukte überraschenderweise unabhängig von der Alterung, insbesondere der Alterung in im Hydrolysetest bei 70 °C und 95% relativer Feuchte nach DIN 53543 bzw. EN ISO 2440. Die vorteilhaften Eigenschaften der erfindungsgemäßen Polymere sollen in den folgenden Beispielen verdeutlicht werden.

### Beispiele

Ausgehend von den in Tabelle 1 aufgeführten Einsatzstoffen wurden Schäume mit einer Dichte von 260 bis 300 g/L hergestellt. Dazu wurden die Komponenten vermischt und in eine offene Form eingespritzt:

**Tabelle 1: Übersicht Systeme**

| **A-Komponente** | | **Gewichtsteile** |
|---|---|---|
| Polyol | | 84,16 |
| KV | | 7,82 |
| Stabilisator 1 | | 0,48 |
| Stabilisator 2 | | 0,29 |
| Wasser | | 0,45 |
| K | | 1,80 |
| IL 1-6 oder AS | | 5,00 |
| **B-Komponente** | | |
| Iso 187/3^{®} | | 100 |

Dabei bedeutet:
- Polyol:: Polyesterpolyol auf Basis von Adipinsäure (ADS), 1,4-Butandiol (B14) und Ethylenglycol (EG)
- KV:: Monoethylenglykol
- Stabilisator 1:: Tegostab B8443^{®} (Degussa)
- Stabilisator 2:: Elastostab H01^{®} (BASF)
- K:: Amin-Katalysator, Lupragen N 203^{®} (BASF)
- AS1:: anorganisches Antistatikum Catafor MS/T^{®} (Rhodia)
- AS2:: organisches Antistatikum Catafor F^{®} (Rhodia)
- IL 1:: 1-Eth-3 Meth-Imidazol Methylsulfonat
- IL 2:: 1-Eth-3 Meth-Imidazol Dicyanamid
- IL 3:: 1-But-3 Meth-Imidazol Hexa- fluorophosphat
- IL 4:: 1-Eth-3 Meth-Imidazol Ethylsulfat
- IL 5:: 1-Eth-3 Meth-Imidazol Thiocyanat

- ISO 187/3^{®}:: Isocyanat-Prepolymer der Firma Elastogran auf Basis von 4,4-MDI, Polyester-Polyolen und ggf. Zusatz von niedermolekularen Diolen, NCO-Gehalt=16,0%

Bei AS1 und 2 handelt es sich um Antistatische Additive aus dem Stand der Technik, die im Rahmen der Vergleichsversuche V1 und V2 getestet wurden. Bei Vergleichsversuch V3 wurde kein antistatisches Additiv zugegeben. Die Versuche 1 bis 5 zeigen die Ergebnisse von erfindungsgemäßen Polyurethanschäumen, denen eine der ionische Flüssigkeiten IL 1 bis IL5 als antistatisches Additiv enthalten. Die dabei gemessenen Durchgangswiderstände und die Dauerwirkung der antistatischen Additive bei Alterung im Hydrolysetest sind in Tabelle 2 aufgeführt. Dabei wird bei dem Hydrolysetest der zu testende Gegenstand die angegebene Zeit bei 70 °C und 95% relativer Luftfeuchtigkeit gelagert.

**Tabelle 2: Übersicht antistatische Eigenschaften und Dauerwirkung**

| | Widerstand [Ω/cm] nach Herstellung | Widerstand [Ω/cm] nach 1 Tag Hydrolyse | Widerstand [Ω/cm] nach 7 Tage Hydrolyse | Widerstand [Ω/cm] nach 14 Tage Hydrolyse |
|---|---|---|---|---|
| Vergleich 1 (AS1) | 6*10⁷ | 6*10⁷ | 2*10⁷ | 5*10⁷ |
| Vergleich 2 (AS2) | 5*10⁶ | 5*10⁶ | 5*10⁸ | 7*10⁸ |
| Vergleich 3 (kein Additiv) | 8*10⁸ | 4*10⁸ | 4*10⁸ | 2*10⁸ |
| Versuch 1 (IL 1) | 4*10⁶ | 2*10⁶ | 4*10⁶ | 6*10⁶ |
| Versuch 2 (IL 2) | 6*10⁵ | 4*10⁵ | 1*10⁶ | 5*10⁵ |
| Versuch 3 (IL 3) | 6*10⁵ | 7*10⁵ | 8*10⁵ | 1*10⁵ |
| Versuch 4 (IL 4) | 3*10⁶ | 1*10⁶ | 2*10⁶ | 7*10⁵ |
| Versuch 5 (IL 5) | 1*10⁶ | 4*10⁵ | 3*10⁵ | 2*10⁵ |

Aus Tabelle 2 ist ersichtlich, dass bei einheitlicher Zugabe von 5 Gew.-% antistatischem Additiv der Durchgangswiderstand bei Verwendung bekannter antistatischer Additive (Vergleichsversuche 1 und 2) höher ist als bei Verwendung ionischer Flüssigkeiten Versuche 1 bis 5). Weiter ist ersichtlich, dass der Durchgangswiderstand für Systeme unter Verwendung des bekannten antistatischen Additivs AS1 gegenüber erfindungsgemäßen Systemen stark erhöht ist, was die geringe Effizienz belegt, und daß der Durchgangswiderstand für Systeme unter Verwendung eines anderen bekannten antistatischen Additives AS2 im Hydrolysetest stark zunimmt und nach 14 Tagen im Hydrolysetest annähernd den Wert eines Schaumstoffs ohne antistatischem Additiv erreicht. Ein solches Verhalten ist bei Verwendung von ionischen Flüssigkeiten als antistatische Additive nicht zu beobachten.

Die Versuche 6, 7 und 8 zeigen die Auswirkungen der antistatischen Additive auf die reaktionsspezifischen und mechanischen Eigenschaften. Ausgehend von den in Tabel le 3 aufgeführten Einsatzstoffen wurden Schäume mit einer frei geschäumten Dichte von 260 bis 300 g/L hergestellt. Dazu wurden die Komponenten vermischt und in eine offene Form eingespritzt. Die mechanischen Kennwerte wurden an Prüfplatten bei doppelter Verdichtung bestimmt:

**Tabelle 3**

| | Versuch 6 [Gewichtsteile] | Versuch 7 [Gewichtsteile] | Versuch 8 [Gewichtsteile] |
|---|---|---|---|
| **A-Komponente:** | | | |
| Polyol | 89 | 77,61 | 76,3 |
| KV | 8 | 11,7 | 11,5 |
| Stabilisator 1 | 0,28 | 0,29 | 0,28 |
| Stabilisator 2 | 0,48 | 0,48 | 0,48 |
| Wasser | 0,45 | 0,42 | 0,44 |
| K | 1,8 | 1,5 | 1,5 |
| IL 5 | - | 8 | 6 |
| AS2 | | | 3,5 |
| **B-Komponente** | | | |
| Iso 187/3^{®} | 88 | 73 | 70 |

Die Charakteristika von der Versuche 6 bis 8 sind in Tabelle 4 angegeben.

| | Versuch 6 | Versuch 7 | Versuch 8 |
|---|---|---|---|
| Startzeit [s] | 13 | 11 | 12 |
| Shore A | 56 | 53 | 55 |
| Widerstand [Ω/cm] | 9*10⁸ | 6*10⁵ | 8*10⁵ |
| Rückprallelastizität [%] | 32 | 37 | 38 |
| Weiterreißfestigkeit [N/mm²] | 13,9 | 13,1 | 13,0 |
| Zugfestigkeit [N/mm²] | 4,1 | 4,6 | 5,1 |
| Dehnung [%] | 392 | 371 | 405 |

Aus Tabelle 4 zeigt sich, dass durch die Zugabe von ionischen Flüssigkeiten zur Verringerung des Durchgangswiderstands die Systemeigenschaften sowie die anderen Produkteigenschaften im wesentlichen unverändert bleiben.

Die Werte wurden dabei folgendermaßen bestimmt:
Rückprallelastizität nach DIN 53512
Zugfestigkeit und Dehnung nach DIN 53504,
Härte Shore A nach DIN 53505,
Weiterreißfestigkeit nach DIN 53507,
Dauerbiegeeigenschaften nach DIN 53543

## Patentansprüche

1. Zelliges Polyurethan, enthaltend eine ionische Flüssigkeit, wobei als Kation für die ionische Flüssigkeit ein Kation eingesetzt wird, ausgewählt aus der Gruppe. bestehend aus Imidazoliumderivaten der allgemeinen Formel (IVe) 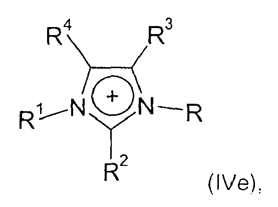 Guanidiniumderivaten der allgemeinen Formel (IVv) 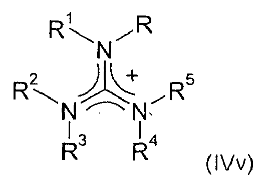 -und Pyrazolinmderivaten der allgemeinen Formeln (IVf), (IVg), (IVg') und (IVh). 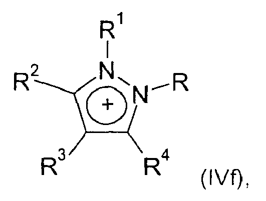 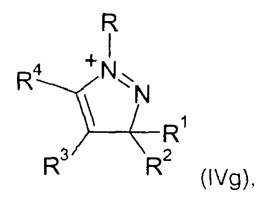 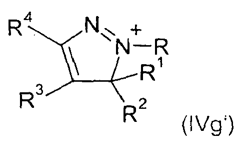 und 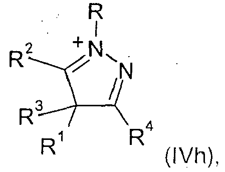 wobei der Rest R für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen steht und
die Reste R¹ bis R⁵ unabhängig voneinander jeweils für Wasserstoff, eine Sulfo-Gruppe oder einen organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen stehen, wobei die Reste R¹ bis R⁵, welche in den oben genannten Formeln (IV) an ein Kohlenstoffatom (und nicht an ein Heteroatom) gebunden sind, zusätzlich auch für Halogen oder eine funktionelle Gruppe stehen können oder
zwei benachbarte Reste aus der Reihe R¹ bis R⁵ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen stehen.

2. Zelliges Polyurethan nach Anspruch 1, **dadurch gekennzeichnet, dass** die ionische Flüssigkeit nicht kovalent an die Polymermatrix gebunden ist.

3. Zelliges Polyurethan nach Anspruch 1 oder 2, **dadurch gekennzeichnet, dass** die ionische Flüssigkeit bei Raumtemperatur flüssig ist.

4. Zelliges Polyurethan nach Anspruch bis 3, **dadurch gekennzeichnet, dass** als Kation für die ionische Flüssigkeit ein Kation eingesetzt wird, ausgewählt aus der Gruppe, bestehend aus 1,2,3-Trimethylimidazolium, 1,3,4,5-Tetramethylimidazolium, 1,3,4-Trimethylimidazolium, 1,3-Dibutyl-2-methylimidazolium, 1,3-Dibutyl,imidazolium, 1,2-Dimethylimidazolium, 1,3-Dimethylimidazolium, 1-Benzyl-3-methylimidazolium, 1-Butyl-2,3-dimeihylimidazolium, 1-Butyl-2-ethyl-5-methylimidazolium, 1-Butyl-2-ethylimidazolium, 1-Butyl-2-methylimidazolium, 1-Butyl-3,4,5-trimethylimidazolium, 1-Butyl-3,4-dimethylimidazolium, 1-Butyl-3-ethylimidazolium, 1-Butyl-3-methylimidazolium, 1-Butyl-4-methylimidazolium, 1-Butylimidazolium, 1-Decyl-3-methylimidazolium, 1-Dodecyl-3-methylimidazolium, 1-Ethyl-2,3-dimethylimidazolium, 1-Ethyl-3-methylimidazolium, 1-Hexadecyl-2,3-dimethylimidazolium, 1-Hexadecyl-3-methylimidazolium, 1-Hexyl-2,3-dimethylimidazolium, 1-Hexyl-3-methylimidazolium, 1-Methyl-2-ethylimidazolium, 1-Methyl-3-octylimidazolium, 1-Methylimidazolium, 1-Pentyl-3-methylimidazolium, 1-Phenylpropyl-3-methylimidazolium, 1-Propyl-2,3-dimethylimidazolium, 1-Tetradecyl-3-methylimidazolium, 2,3-Dimethylimidazolium, 2-Ethyl-3,4-dimethylimidazolium, 3,4-Dimethylimidazolium, Guanidinium, Hexamethylgua-nidinium, N,N,N',N'-Tetramethyl-N"-ethylguanidinium, N-Pentamethyl-N-isopropylguanidinium und N-Pentamethyl-N-propylguanidinium.

5. Zelliges Polyurethan nach Anspruch 1 bis 4, **dadurch gekennzeichnet, dass** als Anion für die ionische Flüssigkeit ein Anion eingesetzt wird, ausgewählt aus der Gruppe, bestehend aus Acetat, Bis(2,4,4-trimethylpentyl)phosphinat, Bis(malonato)borat, Bis(oxalato)borat, Bis(pentafluoroethyl)phosphinat, Bis(phtalato)borat, Bis(salicylato)borat, Bis(trifluoromethansulfonyl)imidat, Bis(trifluoromethansulfonyl)methan, Bis(trifluoromethyl)imidat, Borat, Bromid, Bromoaluminate, Carbonat, Chloroaluminate, Decylbenzolsulfonat, Dichlorocuprat, Dicyanamid, Didecylbenzolsulfonat, Didodecylbenzolsulfonat, Diethylphosphat, Dihydrogenphosphat, Dodecylbenzolsulfonat, Ethylsulfat, Ethylsulfonat, Fluorid, Hexafluorophosphat, Hydrogencarbonat, Hydrogenphosphat, Hydrogensulfat, Hydrogensulfit, Iodid, Methylsulfat, Methylsulfonat, Nitrat, Nitrit, Phosphat, Sulfit, Tetracyanoborat, Tetrafluoroborat, Tetrakis(hydrogensulfato)borat, Tetrakis(methylsulfonato)borat, Thiocyanat, Tosylat, Trichlorozinkat, Trifluoroacetat, Trifluoromethylsulfonat, Tris(heptafluoropropyl)trifluorophosphat, Tris(nonafluorobutyl)trifluorophosphat, Tris(pentafluoroethyl)trifluorophosphat, Tris(pentafluoroethylsulfonyl)trifluorophosphat.

6. Zelliges Polyurethan nach Anspruch 1 bis 3, **dadurch gekennzeichnet, dass** die ionische Flüssigkeit ausgewählt ist aus der Gruppe, bestehend aus 1-Ethyl-3-methylimidazoliummethylsulfonat, 1-Ethyl-3-methylimidazoliumdicyanamid, 1-Ethyl-3-methylimidazoliumethylsulfat, 1-Ethyl-3-methylimidazoliumthiocyanat, 1-Ethyl-3-methylimidazoliumtetrafluoroborat, 1-Ethyl-3-methylimidazoliumhexafluorophosphat, 1-Ethyl-3-methylimidazoliumdiethylphosphat, 1-Ethyl-3-methylimidazoliumbromid, 1-Ethyl-3-methylimidazolium-*p*-toluolsulfonat, 1-Butyl-3-methylimidazoliummethansulfonat, 1- Butyl-3-methylimidazoliumdicyanamid, 1-Butyl-3-methylimidazoliumethylsulfat, 1- Butyl-3-methylimidazoliumthiocyanat, 1-Butyl-3-methylimidazoliumdimethylphosphat, 1- Butyl-3-methylimidazoliumbromid, 1- Butyl-3-methylimidazolium-*p*-toluolsulfonat, 1-Butyl-3-methylimidazoliumtetrafluoroborat und 1-Butyl-3-methylimidazoliumhexafluorophosphat.

7. Zelliges Polyurethan nach Anspruch 1 bis 6, **dadurch gekennzeichnet, dass** die ionische Flüssigkeit in einer Menge von 0,001 bis 30 Gew.-%, bezogen auf das Gesamtgewicht des Polymers, enthalten ist.

8. Rolle, **dadurch gekennzeichnet, dass** diese ein zelliges Polyurethan nach Anspruch 1 bis 7 enthält.

9. Folie, **dadurch gekennzeichnet, dass** diese ein zelliges Polyurethan nach Anspruch 1 bis 7 enthält.

10. Fußbodenbelag, **dadurch gekennzeichnet, dass** dieser ein zelliges Polyurethan nach Anspruch 1 bis 7 enthält.

11. Automobilinnenteile, **dadurch gekennzeichnet, dass** diese ein zelliges Polyurethan nach Anspruch 1 - 7 enthalten.

12. Antistatische Schuhsohle, **dadurch gekennzeichnet, dass** diese ein zelliges Polyurethan nach Anspruch 1 bis 7 enthält.

13. Sicherheitsschuh, enthaltend eine antistatische Schuhsohle nach Anspruch 12 als Zwischensohle und/oder als Laufsohle.

14. Verfahren zur Herstellung eines antistatischen, zelligen Polyisocyanat-Polyadditionsprodukts, bei dem man
a) organische und/oder modifizierte Polyisocyanate mit
b) mindestens einer höhermolekularen Verbindung mit mindestens zwei reaktiven Wasserstoffatomen und
c) gegebenenfalls niedermolekularen Kettenverlängerungsmitteln, in Gegenwart von
d) antistatischem Additiv, enthaltend ionische Flüssigkeit,
e) Katalysatoren,
f) Treibmittel und
g) gegebenenfalls sonstigen Zusatzstoffen, umsetzt,
wobei als Kation für die ionische Flüssigkeit ein Kation eingesetzt wird, ausgewählt aus der Gruppe, bestehend aus Imidazoliumderivaten der allgemeinen Formel (IVe) 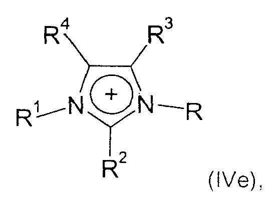 Guanidiniumderivaten der allgemeinen Formel (IVv) 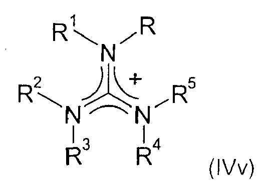 und Pyrazoliumderivaten der allgemeinen Formeln (IVf), (IVg), (IVg') und (IVh), 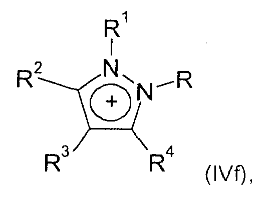 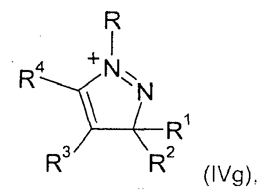 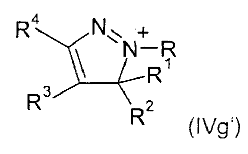 und 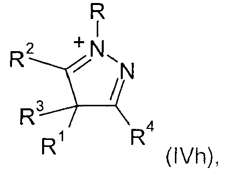 wobei der Rest R für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen steht und
die Reste R¹ bis R⁵ unabhängig voneinander jeweils für Wasserstoff, eine Sulfo-Gruppe oder einen organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen stehen, wobei die Reste R¹ bis R⁵, welche in den oben genannten Formeln (IV) an ein Kohlenstoffatom (und nicht an ein Heteroatom) gebunden sind, zusätzlich auch für Halogen oder eine funktionelle Gruppe stehen können oder
zwei benachbarte Reste aus der Reihe R¹ bis R⁵ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen stehen.

15. Verwendung von ionischen Flüssigkeiten als antistatisches Additiv für zellige Polyurethane, wobei als Kation für die ionische Flüssigkeit ein Kation eingesetzt wird, ausgewählt aus der Gruppe, bestehend aus Imidazoliumderivaten der allgemeinen Formel (IVe) 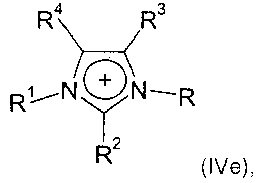 Guanidiniumderivaten der allgemeinen Formel (IVv) 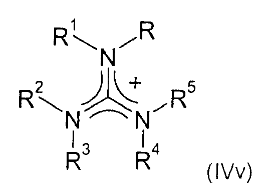 und Pyrazoliumderivaten der allgemeinen Formeln (IVf), (IVg), (IVg') und (IVh), 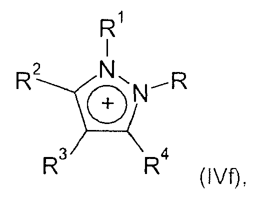 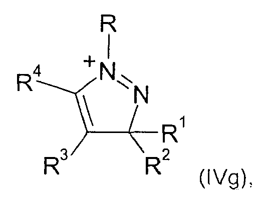 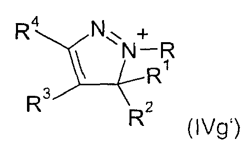 und 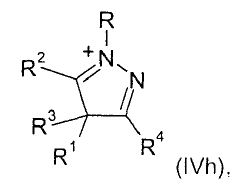 wobei der Rest R für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen steht und
die Reste R¹ bis R⁵ unabhängig voneinander jeweils für Wasserstoff, eine Sulfo-Gruppe oder einen organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen stehen, wobei die Reste R¹ bis R⁵, welche in den oben genannten Formeln (IV) an ein Kohlenstoffatom (und nicht an ein Heteroatom) gebunden sind, zusätzlich auch für Halogen oder eine funktionelle Gruppe stehen können oder
zwei benachbarte Reste aus der Reihe R¹ bis R⁵ zusammen auch für einen zweibindigen. Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen stehen.

## Claims

1. A cellular polyurethane comprising an ionic liquid, wherein the cation used for the ionic liquid is a cation selected from the group consisting of imidazolium derivatives of the general formula (IVe) 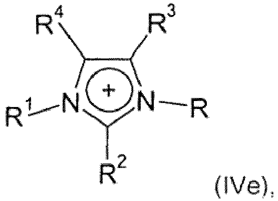 guanidinium derivatives of the general formula (IVv) 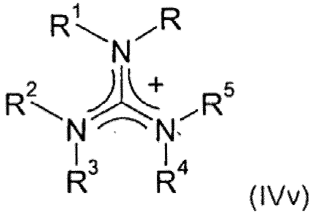 and pyrazolium derivatives of the general formulae (IVf), (IVg), (IVg') and (IVh) 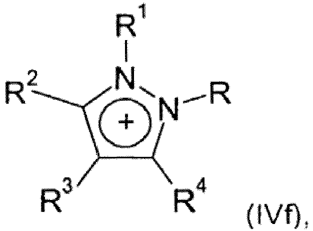 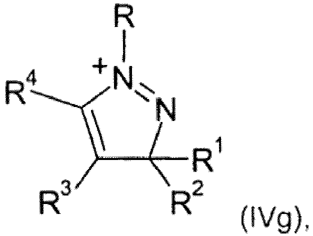 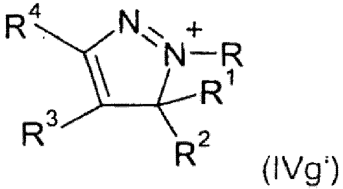 and 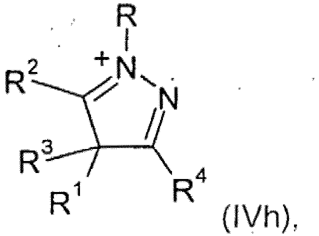 where the radical R is hydrogen, a carbon-comprising organic, saturated or unsaturated, acyclic or cyclic, aliphatic, aromatic or araliphatic radical which has from 1 to 20 carbon atoms and may be unsubstituted or interrupted or substituted by from 1 to 5 heteroatoms or functional groups, and
the radicals R¹ to R⁵ are each, independently of one another, hydrogen, a sulfo group or an organic, saturated or unsaturated, acyclic or cyclic, aliphatic, aromatic or araliphatic radical which has from 1 to 20 carbon atoms and may be unsubstituted or interrupted or substituted by from 1 to 5 heteroatoms or functional groups, where the radicals R¹ to R⁵ which are bound to a carbon atom (and not to a heteroatom) in the abovementioned formulae (IV) may also be halogen or a functional group, or
two adjacent radicals from the group consisting of R¹ to R⁵ may together also form a divalent, carbon-comprising organic, saturated or unsaturated, acyclic or cyclic, aliphatic, aromatic or araliphatic radical which has from 1 to 30 carbon atoms and may be unsubstituted or interrupted or substituted by from 1 to 5 heteroatoms or functional groups.

2. The cellular polyurethane according to claim 1, wherein the ionic liquid is not covalently bound to the polymer matrix.

3. The cellular polyurethane according to claim 1 or 2, wherein the ionic liquid is liquid at room temperature.

4. The cellular polyurethane according to claim to 3, wherein the cation used for the ionic liquid is a cation selected from the group consisting of 1,2,3-trimethylimidazolium, 1,3,4,5-tetramethylimidazolium, 1,3,4-trimethylimidazolium, 1,3-dibutyl-2-methylimidazolium, 1,3-dibutylimidazolium, 1,2-dimethylimidazolium, 1,3-dimethylimidazolium, 1-benzyl-3-methylimidazolium, 1-butyl-2,3-dimethylimidazolium, 1-butyl-2-ethyl-5-methylimidazolium, 1-butyl-2-ethylimidazolium, 1-butyl-2-methylimidazolium, 1-butyl-3,4,5-trimethylimidazolium, 1-butyl-3,4-dimethylimidazolium, 1-butyl-3-ethylimidazolium, 1-butyl-3-methylimidazolium, 1-butyl-4-methylimidazolium, 1-butylimidazolium, 1-decyl-3-methylimidazolium, 1-dodecyl-3-methylimidazolium, 1-ethyl-2,3-dimethylimidazolium, 1-ethyl-3-methylimidazolium, 1-hexadecyl-2,3-dimethylimidazolium, 1-hexadecyl-3-methylimidazolium, 1-hexyl-2,3-dimethylimidazolium, 1-hexyl-3-methylimidazolium, 1-methyl-2-ethylimidazolium, 1-methyl-3-octylimidazolium, 1-methylimidazolium, 1-pentyl-3-methylimidazolium, 1-phenylpropyl-3-methylimidazolium, 1-propyl-2,3-dimethylimidazolium, 1-tetradecyl-3-methylimidazolium, 2,3-dimethylimidazolium, 2-ethyl-3,4-dimethylimidazolium, 3,4-dimethylimidazolium, guanidinium, hexamethylguanidinium, N,N,N',N'-tetramethyl-N"-ethylguanidinium, N-pentamethyl-N-isopropylguanidinium and N-pentamethyl-N-propylguanidinium.

5. The cellular polyurethane according to any of claims 1 to 4, wherein the anion used for the ionic liquid is an anion selected from the group consisting of acetate, bis(2,4,4-trimethylpentyl)phosphinate, bis(malonato)borate, bis(oxalato)borate, bis(pentafluoroethyl)phosphinate, bis(phthalato)borate, bis(salicylato)borate, bis(trifluoromethanesulfonyl)imidate, bis(trifluoromethanesulfonyl)methane, bis(trifluoromethyl)imidate, borate, bromide, bromoaluminates, carbonate, chloroaluminates, decylbenzenesulfonate, dichlorocuprate, dicyanamide, didecylbenzenesulfonate, didodecylbenzenesulfonate, diethylphosphate, dihydrogenphosphate, dodecylbenzenesulfonate, ethylsulfate, ethylsulfonate, fluoride, hexafluorophosphate, hydrogencarbonate, hydrogenphosphate, hydrogensulfate, hydrogensulfite, iodide, methylsulfate, methylsulfonate, nitrate, nitrite, phosphate, sulfite, tetracyanoborate, tetrafluoroborate, tetrakis(hydrogensulfato)borate, tetrakis(methylsulfonato)borate, thiocyanate, tosylate, trichlorozincate, trifluoroacetate, trifluoromethylsulfonate, tris(heptafluoropropyl)trifluorophosphate, tris(nonafluorobutyl)trifluorophosphate, tris(pentafluoroethyl)trifluorophosphate, tris(pentafluoroethylsulfonyl)trifluorophosphate.

6. The cellular polyurethane according to any of claims 1 to 3, wherein the ionic liquid is selected from the group consisting of 1-ethyl-3-methylimidazolium methylsulfonate, 1-ethyl-3-methylimidazolium dicyanamide, 1-ethyl-3-methylimidazolium ethylsulfate, 1-ethyl-3-methylimidazolium thiocyanate, 1-ethyl-3-methylimidazolium tetrafluoroborate, 1-ethyl-3-methylimidazolium hexafluorophosphate, 1-ethyl-3-methylimidazolium diethylphosphate, 1-ethyl-3-methylimidazolium bromide, 1-ethyl-3-methylimidazolium *p*-toluenesulfonate, 1-butyl-3-methylimidazolium methanesulfonate, 1-butyl-3-methylimidazolium dicyanamide, 1-butyl-3-methylimidazolium ethylsulfate, 1-butyl-3-methylimidazolium thiocyanate, 1-butyl-3-methylimidazolium dimethylphosphate, 1-butyl-3-methylimidazolium bromide, 1-butyl-3-methylimidazolium *p*-toluenesulfonate, 1-butyl-3-methylimidazolium tetrafluoroborate and 1-butyl-3-methylimidazolium hexafluorophosphate.

7. The cellular polyurethane according to any of claims 1 to 6, wherein the ionic liquid is comprised in an amount of from 0.001 to 30% by weight, based on the total weight of the polymer.

8. A roller comprising a cellular polyurethane according to any of claims 1 to 7.

9. A film comprising a cellular polyurethane according to any of claims 1 to 7.

10. A floor covering comprising a cellular polyurethane according to any of claims 1 to 7.

11. An automobile interior component comprising a cellular polyurethane according to any of claims 1 to 7.

12. An antistatic shoe sole comprising a cellular polyurethane according to any of claims 1 to 7.

13. A safety shoe comprising an antistatic shoe sole according to claim 12 as throughsole and/or as outsole.

14. A process for producing an antistatic, cellular polyisocyanate polyaddition product, which comprises reacting
a) organic and/or modified polyisocyanates with
b) at least one relatively high molecular weight compound having at least two reactive hydrogen atoms and
c) optionally low molecular weight chain extenders, in the presence of
d) an antistatic additive comprising an ionic liquid,
e) catalysts,
f) blowing agents and
g) optionally other additives,
wherein the cation used for the ionic liquid is a cation selected from the group consisting of imidazolium derivatives of the general formula (IVe) 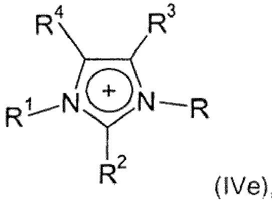 guanidinium derivatives of the general formula (IVv) 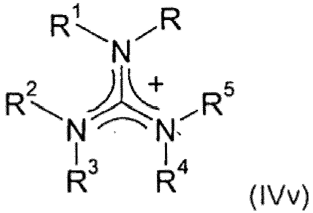 and pyrazolium derivatives of the general formulae (IVf), (IVg), (IVg') and (IVh) 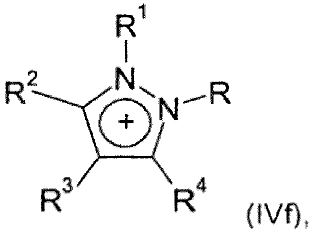 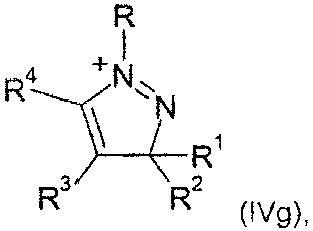 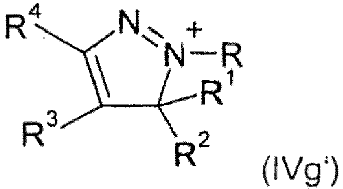 and 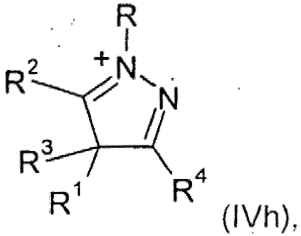 where the radical R is hydrogen, a carbon-comprising organic, saturated or unsaturated, acyclic or cyclic, aliphatic, aromatic or araliphatic radical which has from 1 to 20 carbon atoms and may be unsubstituted or interrupted or substituted by from 1 to 5 heteroatoms or functional groups, and
the radicals R¹ to R⁵ are each, independently of one another, hydrogen, a sulfo group or an organic, saturated or unsaturated, acyclic or cyclic, aliphatic, aromatic or araliphatic radical which has from 1 to 20 carbon atoms and may be unsubstituted or interrupted or substituted by from 1 to 5 heteroatoms or functional groups, where the radicals R¹ to R⁵ which are bound to a carbon atom (and not to a heteroatom) in the abovementioned formulae (IV) may also be halogen or a functional group, or
two adjacent radicals from the group consisting of R¹ to R⁵ may together also form a divalent, carbon-comprising organic, saturated or unsaturated, acyclic or cyclic, aliphatic, aromatic or araliphatic radical which has from 1 to 30 carbon atoms and may be unsubstituted or interrupted or substituted by from 1 to 5 heteroatoms or functional groups.

15. The use of ionic liquids as antistatic additive for cellular polyurethanes, wherein the cation used for the ionic liquid is a cation selected from the group consisting of imidazolium derivatives of the general formula (IVe) 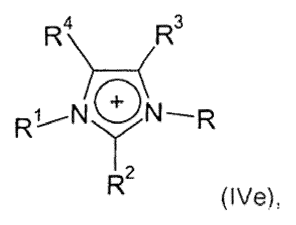 guanidinium derivatives of the general formula (IVv) 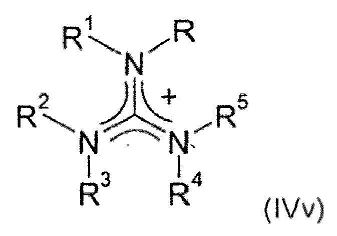 and pyrazolium derivatives of the general formulae (IVf), (IVg), (IVg') and (IVh) 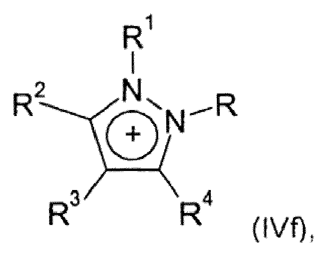 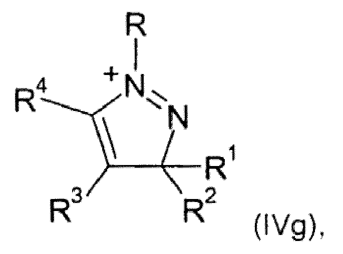 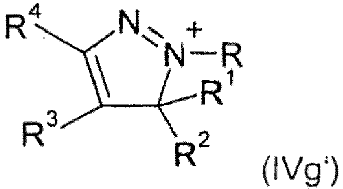 and 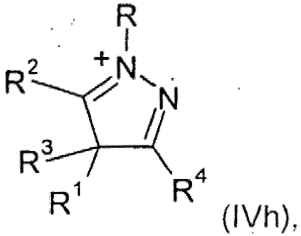 where the radical R is hydrogen, a carbon-comprising organic, saturated or unsaturated, acyclic or cyclic, aliphatic, aromatic or araliphatic radical which has from 1 to 20 carbon atoms and may be unsubstituted or interrupted or substituted by from 1 to 5 heteroatoms or functional groups, and
the radicals R¹ to R⁵ are each, independently of one another, hydrogen, a sulfo group or an organic, saturated or unsaturated, acyclic or cyclic, aliphatic, aromatic or araliphatic radical which has from 1 to 20 carbon atoms and may be unsubstituted or interrupted or substituted by from 1 to 5 heteroatoms or functional groups, where the radicals R¹ to R⁵ which are bound to a carbon atom (and not to a heteroatom) in the abovementioned formulae (IV) may also be halogen or a functional group, or
two adjacent radicals from the group consisting of R¹ to R⁵ may together also form a divalent, carbon-comprising organic, saturated or unsaturated, acyclic or cyclic, aliphatic, aromatic or araliphatic radical which has from 1 to 30 carbon atoms and may be unsubstituted or interrupted or substituted by from 1 to 5 heteroatoms or functional groups.

## Revendications

1. Polyuréthanne cellulaire, contenant un liquide ionique, pour le liquide ionique étant utilisé comme cation un cation choisi dans le groupe constitué par des dérivés d'imidazolium de formule générale (IVe) 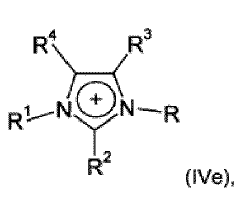 des dérivés de guanidinium de formule générale (IVv) 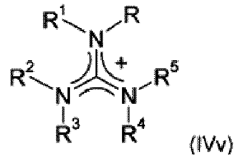 et des dérivés de pyrazolium de formules générales (IVf), (IVg), (IVg') et (IVh), 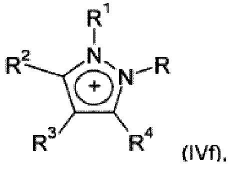 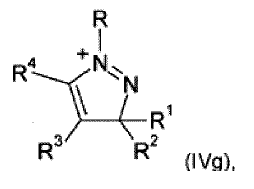 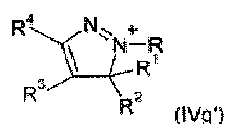 et 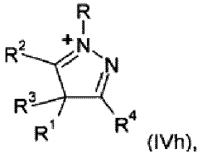 où le radical R représente un atome d'hydrogène, un radical organique contenant du carbone, ayant de 1 à 20 atomes de carbone, saturé ou insaturé, acyclique ou cyclique, aliphatique, aromatique ou araliphatique, non substitué ou substitué ou interrompu par 1 à 5 hétéroatomes ou groupes fonctionnels et
les radicaux R¹ à R⁵ représentent chacun indépendamment les uns des autres un atome d'hydrogène, un groupe sulfo ou un radical organique ayant de 1 à 20 atomes de carbone, saturé ou insaturé, acyclique ou cyclique, aliphatique, aromatique ou araliphatique, non substitué ou substitué ou interrompu par 1 à 5 hétéroatomes ou groupes fonctionnels, les radicaux R¹ à R⁵ qui dans les formules (IV) indiquées plus haut sont liés à un atome de carbone (et non à un hétéroatome) pouvant représenter en outre également un atome d'halogène ou un groupe fonctionnel ou
deux radicaux contigus choisis dans la série R¹ à R⁵ représentant également ensemble un radical organique à deux liaisons, contenant du carbone, ayant de 1 à 30 atomes de carbone, saturé ou insaturé, acyclique ou cyclique, aliphatique, aromatique ou araliphatique, non substitué ou substitué ou interrompu par 1 à 5 hétéroatomes ou groupes fonctionnels.

2. Polyuréthanne cellulaire selon la revendication 1, **caractérisé en ce que** le liquide ionique n'est pas lié par covalence à la matrice polymère.

3. Polyuréthanne cellulaire selon la revendication 1 ou 2, **caractérisé en ce que** le liquide ionique est liquide à la température ambiante.

4. Polyuréthanne cellulaire selon l'une quelconque des revendications à 3, **caractérisé en ce qu'**on utilise comme cation pour le liquide ionique un cation choisi dans le groupe constitué par les ions 1,2,3-triméthylimidazolium, 1,3,4,5-tétraméthylimidazolium, 1,3,4-triméthylimidazolium, 1,3-dibutyl-2-méthylimidazolium, 1,3-dibutylimidazolium, 1,2-diméthylimidazolium, 1,3-diméthylimidazolium, 1-benzyl-3-méthylimidazolium, 1-butyl-2,3-diméthylimidazolium, 1-butyl-2-éthyl-5-méthylimidazolium, 1-butyl-2-éthylimidazolium, 1-butyl-2-méthylimidazolium, 1-butyl-3,4,5-triméthylimidazolium, 1-butyl-3,4-diméthylimidazolium, 1-butyl-3-éthylimidazolium, 1-butyl-3-méthylimidazolium, 1-butyl-4-méthylimidazolium, 1-butylimidazolium, 1-décyl-3-méthylimidazolium, 1-dodécyl-3-méthylimidazolium, 1-éthyl-2,3-diméthylimidazolium, 1-éthyl-3-méthylimidazolium, 1-hexadécyl-2,3-diméthylimidazolium, 1-hexadécyl-3-méthylimidazolium, 1-hexyl-2,3-diméthylimidazolium, 1-hexyl-3-méthylimidazolium, 1-méthyl-2-éthylimidazolium, 1-méthyl-3-octylimidazolium, 1-méthylimidazolium, 1-pentyl-3-méthylimidazolium, 1-phénylpropyl-3-méthylimidazolium, 1-propyl-2,3-diméthylimidazolium, 1-tétradécyl-3-méthylimidazolium, 2,3-diméthylimidazolium, 2-éthyl-3,4-diméthylimidazolium, 3,4-diméthylimidazolium, guanidinium, hexaméthylguanidinium, N,N,N',N'-tétraméthyl-N"-éthylguanidinium, N-pentaméthyl-N-isopropylguanidinium et N-pentaméthyl-N-propylguanidinium.

5. Polyuréthanne cellulaire selon l'une quelconque des revendications 1 à 4, **caractérisé en ce qu'**on utilise comme anion pour le liquide ionique un anion choisi dans le groupe constitué par les ions acétate, bis(2,4,4-triméthylpentyl)phosphinate, bis(malonato)borate, bis(oxalato)borate, bis(pentafluoroéthyl)phosphinate, bis(phtalato)borate, bis(salicylato)borate, bis(trifluorométhanesulfonyl)imidate, bis(trifluorométhanesulfonyl)méthane, bis(trifluorométhyl)imidate, borate, bromure, bromoaluminates, carbonate, chloroaluminates, décylbenzènesulfonate, dichlorocuprate, dicyanamide, didécylbenzènesulfonate, didodécylbenzènesulfonate, diéthylphosphate, dihydrogénophosphate, dodécylbenzènesulfonate, éthylsulfate, éthylsulfonate, fluorure, hexafluorophosphate, hydrogénocarbonate, hydrogénophosphate, hydrogénosulfate, hydrogénosulfite, iodure, méthylsulfate, méthylsulfonate, nitrate, nitrite, phosphate, sulfite, tétracyanoborate, tétrafluoroborate, tétrakis(hydrogénosulfato)borate, tétrakis(méthylsulfonato)borate, thiocyanate, tosylate, trichlorozincate, trifluoroacétate, trifluorométhylsulfonate, tris(heptafluoropropyl)trifluorophosphate, tris(nonafluorobutyl)trifluorophosphate, tris(pentafluoroéthyl)trifluorophosphate, tris(pentafluoroéthylsulfonyl)trifluorophosphate.

6. Polyuréthanne cellulaire selon l'une quelconque des revendications 1 à 3, **caractérisé en ce que** le liquide ionique est choisi parmi le méthylsulfonate de 1-éthyl-3-méthylimidazolium, le dicyanamide de 1-éthyl-3-méthylimidazolium, le méthylsulfate de 1-éthyl-3-méthylimidazolium, le thiocyanate de 1-éthyl-3-méthylimidazolium, le tétrafluoroborate de 1-éthyl-3-méthylimidazolium, l'hexafluorophosphate de 1-éthyl-3-méthylimidazolium, le diéthylphosphate de 1-éthyl-3-méthylimidazolium, le bromure de 1-éthyl-3-méthylimidazolium, le p-toluènesulfonate de 1-éthyl-3-méthylimidazolium, le méthanesulfonate de 1-butyl-3-méthylimidazolium, le dicyanamide de 1-butyl-3-méthylimidazolium, le méthylsulfate de 1-butyl-3-méthylimidazolium, le thiocyanate de 1-butyl-3-méthylimidazolium, le diméthylphosphate de 1-butyl-3-méthylimidazolium, le bromure de 1-butyl-3-méthylimidazolium, le p-toluènesulfonate de 1-butyl-3-méthylimidazolium, le tétrafluoroborate de 1-butyl-3-méthylimidazolium et l'hexafluorophosphate de 1-butyl-3-méthylimidazolium.

7. Polyuréthanne cellulaire selon l'une quelconque des revendications 1 à 6, **caractérisé en ce que** le liquide ionique est contenu en une quantité de 0,001 à 30 % en poids, par rapport au poids total du polymère.

8. Rouleau, **caractérisé en ce que** celui-ci contient un polyuréthanne cellulaire selon l'une quelconque des revendications 1 à 7.

9. Film, **caractérisé en ce que** celui-ci contient un polyuréthanne cellulaire selon l'une quelconque des revendications 1 à 7.

10. Revêtement de sol, **caractérisé en ce que** celui-ci contient un polyuréthanne cellulaire selon l'une quelconque des revendications 1 à 7.

11. Pièces intérieures d'automobiles, **caractérisées en ce que** celles-ci contiennent un polyuréthanne cellulaire selon l'une quelconque des revendications 1 à 7.

12. Semelle de chaussure, **caractérisée en ce que** celle-ci contient un polyuréthanne cellulaire selon l'une quelconque des revendications 1 à 7.

13. Chaussure de sécurité, comportant une semelle de chaussure antistatique selon la revendication 12 en tant que semelle intermédiaire et/ou en tant que semelle d'usure.

14. Procédé pour la préparation d'un produit de polyaddition à base de polyisocyanate cellulaire antistatique, dans lequel on fait réagir
a) des polyisocyanates organiques et/ou modifiés avec
b) au moins un composé de masse moléculaire élevée, comportant au moins deux atomes d'hydrogène réactifs et
c) éventuellement des prolongateurs de chaîne, de faible masse moléculaire, en présence
d) d'additif antistatique, contenant un liquide ionique,
e) de catalyseurs,
f) d'agents d'expansion et
g) éventuellement d'autres additifs,
pour le liquide ionique étant utilisé comme cation un cation choisi dans le groupe constitué par des dérivés d'imidazolium de formule générale (IVe) 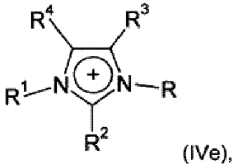 des dérivés de guanidinium de formule générale (IVv) 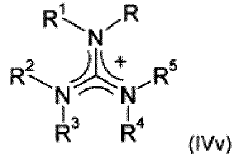 et des dérivés de pyrazolium de formules générales (IVf), (IVg), (IVg') et (IVh), 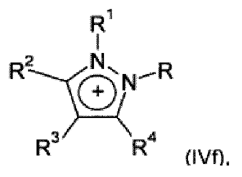 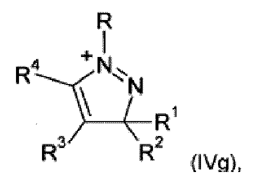 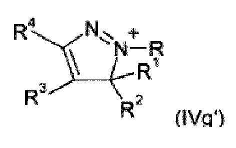 et 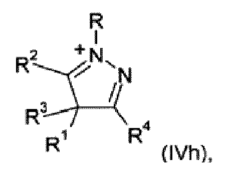 où le radical R représente un atome d'hydrogène, un radical organique contenant du carbone, ayant de 1 à 20 atomes de carbone, saturé ou insaturé, acyclique ou cyclique, aliphatique, aromatique ou araliphatique, non substitué ou substitué ou interrompu par 1 à 5 hétéroatomes ou groupes fonctionnels et
les radicaux R¹ à R⁵ représentent chacun indépendamment les uns des autres un atome d'hydrogène, un groupe sulfo ou un radical organique ayant de 1 à 20 atomes de carbone, saturé ou insaturé, acyclique ou cyclique, aliphatique, aromatique ou araliphatique, non substitué ou substitué ou interrompu par 1 à 5 hétéroatomes ou groupes fonctionnels, les radicaux R¹ à R⁵ qui dans les formules (IV) indiquées plus haut sont liés à un atome de carbone (et non à un hétéroatome) pouvant représenter en outre également un atome d'halogène ou un groupe fonctionnel ou
deux radicaux contigus choisis dans la série R¹ à R⁵ représentant également ensemble un radical organique à deux liaisons, contenant du carbone, ayant de 1 à 30 atomes de carbone, saturé ou insaturé, acyclique ou cyclique, aliphatique, aromatique ou araliphatique, non substitué ou substitué ou interrompu par 1 à 5 hétéroatomes ou groupes fonctionnels.

15. Utilisation de liquides ioniques en tant qu'additif antistatique pour polyuréthannes cellulaires, pour le liquide ionique étant utilisé comme cation un cation choisi dans le groupe constitué par des dérivés d'imidazolium de formule générale (IVe) 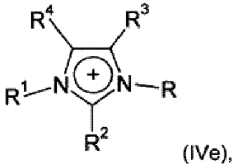 des dérivés de guanidinium de formule générale (IVv) 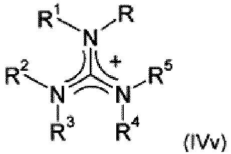 et des dérivés de pyrazolium de formules générales (IVf), (IVg), (IVg') et (IVh), 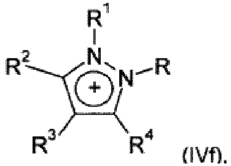 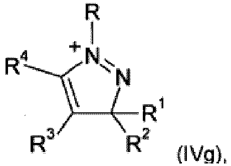 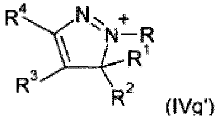 et 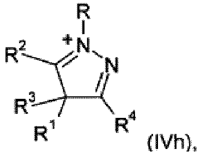 où le radical R représente un atome d'hydrogène, un radical organique contenant du carbone, ayant de 1 à 20 atomes de carbone, saturé ou insaturé, acyclique ou cyclique, aliphatique, aromatique ou araliphatique, non substitué ou substitué ou interrompu par 1 à 5 hétéroatomes ou groupes fonctionnels et
les radicaux R¹ à R⁵ représentent chacun indépendamment les uns des autres un atome d'hydrogène, un groupe sulfo ou un radical organique ayant de 1 à 20 atomes de carbone, saturé ou insaturé, acyclique ou cyclique, aliphatique, aromatique ou araliphatique, non substitué ou substitué ou interrompu par 1 à 5 hétéroatomes ou groupes fonctionnels, les radicaux R¹ à R⁵ qui dans les formules (IV) indiquées plus haut sont liés à un atome de carbone (et non à un hétéroatome) pouvant représenter en outre également un atome d'halogène ou un groupe fonctionnel ou
deux radicaux contigus choisis dans la série R¹ à R⁵ représentant également ensemble un radical organique à deux liaisons, contenant du carbone, ayant de 1 à 30 atomes de carbone, saturé ou insaturé, acyclique ou cyclique, aliphatique, aromatique ou araliphatique, non substitué ou substitué ou interrompu par 1 à 5 hétéroatomes ou groupes fonctionnels.
